(19) Europäisches Patentamt
European Patent Office
Office européen des brevets

(11) EP 4 375 306 A1

(12) EUROPEAN PATENT APPLICATION
published in accordance with Art. 153(4) EPC

(43) Date of publication:
**29.05.2024 Bulletin 2024/22**

(21) Application number: **22876977.4**

(22) Date of filing: **30.09.2022**

(51) International Patent Classification (IPC):
***C08F 297/02*** *(2006.01)* ***C08F 212/08*** *(2006.01)*
***C08F 210/14*** *(2006.01)* ***C08F 4/64*** *(2006.01)*
***C08F 4/46*** *(2006.01)*

(52) Cooperative Patent Classification (CPC):
**C08F 4/46; C08F 4/64; C08F 210/14; C08F 212/08; C08F 297/02**

(86) International application number:
**PCT/KR2022/014835**

(87) International publication number:
**WO 2023/055206 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2021 KR 20210130754**
**29.09.2022 KR 20220124446**

(71) Applicant: **LG Chem, Ltd.**
**Yeongdeungpo-gu**
**Seoul 07336 (KR)**

(72) Inventors:
- **CHO, Sol**
  **Daejeon 34122 (KR)**
- **PARK, Ji Hyun**
  **Daejeon 34122 (KR)**
- **IM, Seul Ki**
  **Daejeon 34122 (KR)**
- **LEE, Hyun Mo**
  **Daejeon 34122 (KR)**
- **KIM, Yun Kon**
  **Daejeon 34122 (KR)**
- **SHIN, Eun Ji**
  **Daejeon 34122 (KR)**
- **SA, Seok Pil**
  **Daejeon 34122 (KR)**

(74) Representative: **Hoffmann Eitle**
**Patent- und Rechtsanwälte PartmbB**
**Arabellastraße 30**
**81925 München (DE)**

# (54) MULTI-BLOCK COPOLYMER, RESIN COMPOSITION COMPRISING SAME, AND METHOD FOR PREPARING SAME

(57) The present invention relates to a multi-block copolymer having a structure in which polystyrene chains are attached to both ends of a polyolefin chain, a resin composition comprising same, and a method for preparing same.

EP 4 375 306 A1

## Description

## TECHNICAL FIELD

The present application claims the benefit of priority based on Korean Patent Application No. 10-2021-0130754, filed on October 1, 2021, and Korean Patent Application No. 10-2022-0124446, filed on September 29, 2022, the entire contents of which are incorporated herein by reference.

The present invention relates to a multiblock copolymer, a resin composition comprising same, and methods for preparing them.

## BACKGROUND ART

Block copolymers are materials widely used in even high-tech devices as well as typical plastics, and research and development thereon is being actively conducted. Particularly, styrene-olefin copolymer resins including both a polyolefin-based (POs) block and a polystyrene-based (PSs) block have excellent properties of heat resistance, light resistance, elasticity, or the like, and are usefully used in wide variety of technical fields.

A market of a hundreds of thousands of tons scale is now formed in the world on polyolefin-polystyrene block copolymers, for example, styrene-ethylene-butylene-styrene (SEES) or styrene-ethylene-propylene-styrene (SEPS). Typically, a polystyrene-block-poly(ethylene-co-1-butene)-block polystyrene (SEES) triblock copolymer may be exemplified as one of the styrene-olefin copolymer resins. A hard polystyrene domain is separated from a soft poly(ethylene-co-1-butene) matrix in the structure of the SEBS triblock copolymer and acts as a physical crosslinking site, and thermoplastic elastomer properties are shown. According to such properties, SEBS is more broadly used in a product group requiring rubber and plastic, and according to the expansion of a using range, there is a significant increase in demand.

[Prior Art Document]

[Patent Document]

(Patent Document 1) Korean Registration Patent No. 10-1657925

## DISCLOSURE OF THE INVENTION

## TECHNICAL PROBLEM

The task to solve in the present invention is to provide a multiblock copolymer having a structure in which polystyrene chains are attached to both terminals of a polyolefin chain, a resin composition including same, and methods for preparing them, and particularly, the present invention provides a multiblock copolymer composition showing excellent tensile strength and excellent compatibility with polypropylene.

Another task to solve of the present invention is to provide a resin composition including the multiblock copolymer composition and having excellent processability and low temperature impact strength.

Another task to solve of the present invention is to provide a method for preparing the multiblock copolymer and a method for preparing the resin composition.

## TECHNICAL SOLUTION

In order to solve the above-described tasks, the present invention provides a multiblock copolymer, a resin composition comprising same, and methods for preparing the multiblock copolymer and the resin composition.

(1) The present invention provides a multiblock copolymer comprising a polystyrene-based block comprising a repeating unit derived from an aromatic vinyl-based monomer, and a polyolefin-based block comprising a repeating unit derived from ethylene and a repeating unit derived from an alpha-olefin-based monomer, wherein the content of the repeating unit derived from an alpha-olefin-based monomer measured by $^{1}$H NMR (500 MHz, tetrachloroethane-d2, TMS standard material) spectrum per the number of branch carbon of the repeating unit derived from an alpha-olefin-based monomer satisfies from 7.0 wt% to 15.0 wt%, and a weight average molecular weight measured by gel permeation chromatography (GPC) is from 110,000 g/mol to 300,000 g/mol.

(2) The present invention provides the multiblock copolymer according to (1), wherein the content of the repeating unit derived from an alpha-olefin-based monomer is from 28 wt% to 60 wt%.

(3) The present invention provides the multiblock copolymer according to (1) or (2), wherein the alpha-olefin-based

monomer is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene and 3,4-dimethyl-1-hexene.

(4) The present invention provides the multiblock copolymer according to any one of (1) to (3), wherein molecular weight distribution of the multiblock copolymer is from 1.5 to 3.0.

(5) The present invention provides a resin composition comprising polypropylene and a multiblock copolymer in a weight ratio of 1:0.01 to 1:0.25, wherein the multiblock copolymer comprises a polystyrene-based block comprising a repeating unit derived from an aromatic vinyl-based monomer, and a polyolefin-based block comprising a repeating unit derived from ethylene and a repeating unit derived from an alpha-olefin-based monomer of 5 or more carbon atoms, and the content of the repeating unit derived from an alpha-olefin-based monomer measured by $^{1}H$ NMR (500 MHz, tetrachloroethane-d2, standard material TMS) spectrum per the number of branch carbon of the repeating unit derived from an alpha-olefin-based monomer satisfies from 7.5 wt% to 15 wt%, and a weight average molecular weight measured by gel permeation chromatography (GPC) is from 110,000 g/mol to 200,000 g/mol.

(6) The present invention provides the resin composition according to (5), wherein the polypropylene and the multiblock copolymer are comprised in a weight ratio of 1:0.01 to 1:0.12.

(7) The present invention provides the resin composition according to (5) or (6), wherein the resin composition has a melt flow rate (MFR, 230°C, 2.16 kg) measured under conditions of 230°C and 2.16 kg load according to ASTM-D 1238 of 1 g/10 min to 15 g/10 min.

(8) The present invention provides the resin composition according to any one of (5) to (7), wherein the content of the repeating unit derived from an alpha-olefin-based monomer of the multiblock copolymer is from 30 wt% to 60 wt%.

(9) The present invention provides a method for preparing the multiblock copolymer according to any one of (1) to (4), comprising: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer and the polyolefin-based block in the presence of an anionic polymerization initiator to prepare a multiblock copolymer.

(10) The present invention provides the method for preparing the multiblock copolymer according to (9), wherein the transition metal compound is a compound represented by Formula 1.

[Formula 1]

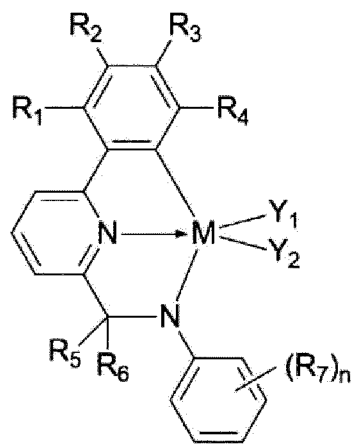

In Formula 1,

M is Ti, Zr or Hf,

$R_1$ to $R_4$ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where adjacent two or more among them may be connected to form a ring;

$R_5$ and $R_6$ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where the substitution is conducted with an alkyl group of 1 to 12 carbon atoms;

each $R_7$ is independently a substituted or unsubstituted alkyl group of 4 to 20 carbon atoms, a substituted or unsubstituted cycloalkyl group of 4 to 20 carbon atoms, or a substituted or unsubstituted aryl group of 6 to 20 carbon atoms;

n is 1 to 5; and

$Y_1$ and $Y_2$ are each independently a halogen group, an alkyl group of 1 to 20 carbon atoms, an alkenyl group of 2 to 20 carbon atoms, an alkynyl group of 2 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, a heteroaryl group of 5 to 20 carbon atoms, an alkoxy group of 1 to 20 carbon atoms, a substituted or unsubstituted aryloxy group of 5 to 20 carbon atoms, an alkylamino group of 1 to 20 carbon atoms, an arylamino group of 5 to 20 carbon atoms, an alkylthio group of 1 to 20 carbon atoms, an arylthio group of 5 to 20 carbon atoms, an alkylsilyl group of 1 to 20 carbon atoms, an arylsilyl group of 5 to 20 carbon atoms, a hydroxyl group, an amino group, a thiol group, a silyl group, a cyano group, or a nitro group.

(11) The present invention provides the method for preparing the multiblock copolymer according to (9) or (10), wherein the organozinc compound is represented by Formula 5.

[Formula 5]

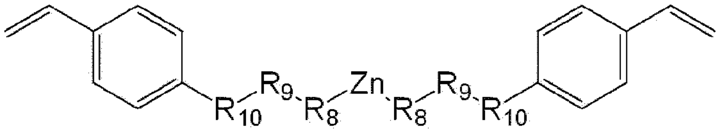

In Formula 5,

$R_8$ and $R_{10}$ are each independently a single bond or an alkylene group of 1 to 10 carbon atoms, $R_9$ is an alkylene group of 1 to 10 carbon atoms or $-SiR_{11}R_{12}-$, and $R_{11}$ and $R_{12}$ are each independently an alkyl group of 1 to 10 carbon atoms.

(12) The present invention provides the method for preparing the multiblock copolymer according to any one of (9) to (11), wherein the anionic polymerization initiator comprises an alkyllithium compound comprising an allyl group, and the allyl group is combined with lithium.

(13) The present invention provides the method for preparing the multiblock copolymer according to any one of (9) to (12), wherein the alkyllithium compound is represented by Formula 11.

[Formula 11]

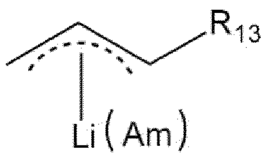

In Formula 11,

$R_{13}$ is hydrogen or a hydrocarbon group of 1 to 20 carbon atoms, and

Am is an amine-based compound represented by Formula 12.

[Formula 12]

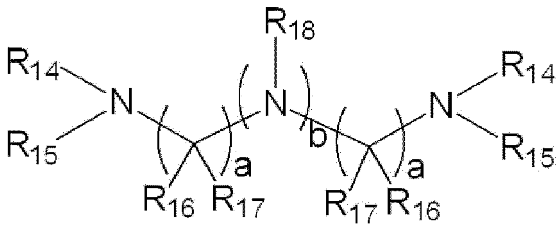

In Formula 12,

$R_{14}$ to $R_{18}$ are each independently hydrogen or a hydrocarbon group of 1 to 20 carbon atoms, and

a and b are each independently an integer of 0 to 3, where a and b are not 0 at the same time.

(14) The present invention provides a method for preparing the resin composition according to any one of (5) to (8), comprising a step of preparing a multiblock copolymer by a preparation method comprising: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer and the polyolefin-based block in the presence of an anionic polymerization initiator to prepare a multiblock copolymer, and a step of mixing the multiblock copolymer with polypropylene in a weight ratio of 1:0.01 to 1:0.25.

## ADVANTAGEOUS EFFECTS

The multiblock copolymer provided in the present invention has the reduced branch carbon content and shows excellent tensile strength and excellent compatibility with polypropylene, and a resin composition comprising same shows improved low temperature impact strength while maintaining high flow properties and may be usefully utilized for the manufacture of medical products.

## BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

In the present description, "alkyl" means a hydrocarbon residual group of a linear chain or branched chain.

In the present invention, "alkyl" means a hydrocarbon residual group of a linear chain or branched chain.

In the present invention, "alkenyl" means an alkenyl group of a linear chain or branched chain.

In the present invention, "aryl" preferably has 6 to 20 carbon atoms, and particularly includes phenyl, naphthyl, anthracenyl, pyridyl, dimethylanilinyl, anisolyl, or the like, without limitation.

In the present invention, "alkylaryl" means an aryl group substituted with the alkyl group.

In the present invention, "arylalkyl" means an alkyl group substituted with the aryl group.

In the present invention, "alkylsilyl" may be silyl substituted with alkyl of 1 to 20 carbon atoms, for example, trimethylsilyl or triethylsilyl.

In the present invention, "alkylamino" means an amino group substituted with the alkyl group and may include a dimethylamino group, a diethylamino group, or the like, without limitation.

In the present invention, "hydrocarbyl" means a monovalent hydrocarbon group of 1 to 20 carbon atoms, composed of only carbon and hydrogen irrespective of its structure, including alkyl, aryl, alkenyl, alkynyl, cycloalkyl, alkylaryl or arylalkyl, unless otherwise mentioned.

In the present description, the term "composition" includes a mixture of materials including the corresponding composition as well as reaction products and decomposition products formed from the material of the corresponding composition.

In the present description, the term "polymer" refers to a polymer compound prepared by polymerizing monomers irrespective of the same type or different types. Like this, the general term polymer covers the term homopolymer that is generally used to refer to a polymer prepared by only one type of a monomer, and the term interpolymer prescribed below.

In the present description, the term "copolymer" refers to a polymer prepared by the polymerization of at least two different monomers.

In the present description, numerical 0 in places below a decimal point "." may be omitted.

Hereinafter, the present invention will be explained in detail.

### Multiblock copolymer

The multiblock copolymer of the present invention is a multiblock copolymer including a polystyrene-based block including a repeating unit derived from an aromatic vinyl-based monomer and a polyolefin-based block including a repeating unit derived from ethylene and a repeating unit derived from an alpha-olefin-based monomer, and may be a polyolefin-polystyrene-based multiblock copolymer having a structure in which polystyrene chain blocks are attached to both terminals of a polyolefin-based chain block.

The multiblock copolymer of the present invention is characterized in that the content of the repeating unit derived from an alpha-olefin-based monomer measured by $^1$H NMR (500 MHz, tetrachloroethane-d2, standard material TMS) spectrum per the number of branch carbon of the repeating unit derived from an alpha-olefin-based monomer satisfies from 7.0 wt% to 15.0 wt%, and a weight average molecular weight measured by gel permeation chromatography (GPC) is from 110,000 g/mol to 300,000 g/mol.

The multiblock copolymer of the present invention has the reduced branch content when compared to a styrene-ethylene-butylene-styrene copolymer (SEBS) and a styrene-ethylene-propylene-styrene copolymer (SEPS), prepared by the conventional two processes of anionic polymerization and hydrogenation reaction, and since the content (weight) of the repeating unit derived from an alpha-olefin-based monomer per carbon number of the repeating unit derived from an alpha-olefin-based monomer satisfies a constant range, excellent tensile strength may be achieved, and excellent compatibility with polypropylene may be shown.

In the present invention, the content of the repeating unit derived from an alpha-olefin-based monomer per the number of branch carbon of the repeating unit derived from an alpha-olefin-based monomer shows a value obtained by dividing the content of the weight of the repeating unit derived from an alpha-olefin-based monomer based on the total weight of the repeating unit derived from an aromatic vinyl-based monomer, the repeating unit derived from ethylene and the repeating unit derived from an alpha-olefin-based monomer, included in the multiblock copolymer by the number of the branch carbon included in the repeating unit derived from an alpha-olefin-based monomer.

[Mathematical Formula 1]

$$C = \frac{al}{Ar + et + al} \div bc \times 100$$

In Mathematical Formula 1, C represents the content of the repeating unit derived from an alpha-olefin-based monomer per the number of branch carbon of the repeating unit derived from an alpha-olefin-based monomer, *al* represents the weight of the repeating unit derived from an alpha-olefin-based monomer, Ar represents the weight of the repeating unit derived from an aromatic vinyl-based monomer, et represents the weight of the repeating unit derived from ethylene, and be represents the number of branch carbon per the repeating unit derived from an alpha-olefin-based monomer.

In addition, in the present invention, the branch content is a value proportional to the total number of branch included in the main chain of the polyolefin-based block. Accordingly, through the content value of the repeating unit derived from an alpha-olefin-based monomer per the number of the branch carbon of the repeating unit derived from an alpha-olefin-based monomer, obtained by dividing the total content of the repeating unit derived from an alpha-olefin-based monomer by the number of the branch carbon of the repeating unit derived from an alpha-olefin-based monomer, the branch contents and the total numbers of the branch included in the main chains of the polyolefin-based blocks included in different multiblock copolymers may be compared.

The number of the branch carbon of the repeating unit derived from an alpha-olefin-based monomer represents the number of carbon constituting the branch included in the repeating unit derived from one alpha-olefin-based monomer, and for example, 1-butene includes two branch carbon, 1-hexene includes four branch carbon, and 1-octene includes six branch carbon.

The content of the repeating unit derived from an alpha-olefin-based monomer per the number of branch carbon of the repeating unit derived from an alpha-olefin-based monomer may particularly satisfy 7.5 wt% or more, 8.0 wt% or more, 8.5 wt% or more, 9.0 wt% or more, and 15 wt% or less, 14.5 wt% or less, 14.0 wt% or less, 13.5 wt% or less, 13.0 wt% or less, or 12.5 wt% or less, more particularly, 9.5 wt% to 12.0 wt%. The multiblock copolymer of the present invention satisfies the content range of the repeating unit derived from an alpha-olefin-based monomer per the number of the branch carbon of the repeating unit derived from an alpha-olefin-based monomer, and may show improved tensile strength, and if applied to a resin composition including polypropylene together, excellent compatibility with the polypropylene may be shown, and the resin composition may show excellent low temperature impact strength.

In an embodiment of the present invention, the content of the repeating unit derived from an alpha-olefin-based monomer included in the multiblock copolymer may be 28 wt% to 60 wt%, particularly, 30 wt% or more, 32 wt% or more, 34 wt% or more, or 36 wt% or more, and 58 wt% or less, 56 wt% or less, 54 wt% or less, 52 wt% or less, or 50 wt% or less, more particularly, 38 wt% to 48 wt%.

The repeating unit derived from an alpha-olefin-based monomer included in the multiblock copolymer of the present invention may be represented by Formula a below.

[Formula a]

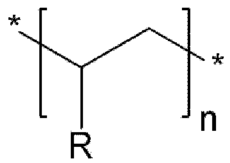

In Formula a, R may be alkyl of 3 to 10 carbon atoms, particularly, alkyl of 3 to 8 carbon atoms, alkyl of 3 to 6 carbon atoms, or alkyl of 4 to 8 carbon atoms, more particularly, alkyl of 4 to 6 carbon atoms. In addition, in an embodiment of the present invention, R may be alkyl of 4 carbon atoms.

In the present description, the number of the branch carbon of the repeating unit derived from an alpha-olefin-based monomer means the carbon number of R.

n may be an integer of 1 to 10,000, and particularly, n may be 10 or more, 50 or more, 100 or more, 200 or more, 300 or more, 500 or more, 600 or more, 700 or more, or 1,000 or more, and 9,000 or less, 8,000 or less, 7,000 or less, 6,000 or less, 5,000 or less, 4,000 or less, or 3,000 or less.

Meanwhile, in the formulas shown in the present description, "*" is the terminal part of the repeating unit and represents a connecting part.

The weight average molecular weight (Mw) of the multiblock copolymer may be 110,000 g/mol to 300,000 g/mol, particularly, 115,000 g/mol or more, or 120,000 g/mol or more, and 300,000 g/mol or less, 250,000 g/mol or less, or 200,000 g/mol or less, more particularly, 130,000 g/mol to 190,000 g/mol.

In addition, the molecular weight distribution (PDI) of the multiblock copolymer may be 1.5 to 3.0. The molecular weight distribution (PDI) of the multiblock copolymer may particularly be 1.55 or more, 1.6 or more, 1.65 or more, or 1.7 or more and 2.9 or less, 2.8 or less, or 2.7 or less, more particularly, 1.7 to 2.6.

The molecular weight distribution is calculated from the ratio of (weight average molecular weight)/(number average molecular weight), and the weight average molecular weight and the number average molecular weight are polystyrene converted molecular weights analyzed by gel permeation chromatography (GPC).

The multiblock copolymer of the present invention may additionally satisfy the molecular weight distribution (PDI) in addition to the content range of the repeating unit derived from an alpha-olefin-based monomer per the number of the branch carbon of the repeating unit derived from an alpha-olefin-based monomer and the weight average molecular weight.

In the polyolefin-polystyrene-based multiblock copolymer of the present invention, the polyolefin block of the multiblock copolymer essentially includes a branched chain come from a main chain but a smaller number of branched chain than the conventional polyolefin-polystyrene-based multiblock copolymer, but shows excellent physical properties.

The multiblock copolymer of the present invention is a polyolefin-polystyrene-based multiblock copolymer including a polystyrene-based block including the repeating unit derived from an aromatic vinyl-based monomer and a polyolefin-based block including the repeating unit derived from ethylene and the repeating unit derived from an alpha-olefin-based monomer, and the alpha-olefin-based monomer may be alpha-olefin of 5 to 20 carbon atoms, particularly, alpha-olefin of 5 to 14 carbon atoms.

The alpha-olefin-based monomer may be, for example, one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene, particularly, 1-hexene.

The multiblock copolymer may be one or more selected from the group consisting of a polystyrene-poly(ethylene-co-1-pentene)-polystyrene block copolymer, a polystyrene-poly(ethylene-co-1-hexene)-polystyrene block copolymer, a polystyrene-poly(ethylene-co-1-heptene)-polystyrene block copolymer, and a polystyrene-poly(ethylene-co-1-octene)-polystyrene block copolymer, particularly, a polystyrene-poly(ethylene-co-1-hexene)-polystyrene block copolymer.

The multiblock copolymer may be prepared by using a specific transition metal compound having a novel structure as described later, as a catalyst, and has a high value of a weight average molecular weight that is an important factor determining the physical properties of a copolymer, the small branch content and a relatively long branch length. Accordingly, the multiblock copolymer of the present invention shows excellent tensile strength and elongation, and if applied to a resin composition, compatibility with polypropylene may be excellent, and high low temperature impact strength may be shown.

The multiblock copolymer of the present invention may have a tensile strength of 11 to 20 MPa, particularly, 11.5 to 18 MPa, more particularly, 12 to 17 MPa. In addition, the multiblock copolymer of the present invention may have an elongation of 2,400 kgf·m/m to 3,000 kgf·m/m, particularly, 2,500 kgf·m/m to 3,000 kgf-m/m, more particularly, 2,600 kgf·m/m to 2,900 kgf·m/m. The tensile strength and the elongation could be measured using a dumb-bell-type specimen according to ASTM D-412 by using a UTM apparatus based on ASTM D638 under conditions of a crosshead speed of 500 mm/min.

**Resin Composition**

In addition, the present invention provides a resin composition including polypropylene and the above-described multiblock copolymer in a weight ratio of 1:0.01 to 1:0.25, and the resin composition of the present invention may be a thermoplastic resin composition.

(1) Polypropylene

In the resin composition according to an embodiment of the present invention, the polypropylene may particularly be a homopolymer of polypropylene, or a copolymer of propylene and an alpha-olefin monomer, and in this case, the copolymer may be an alternating, random, or block copolymer.

The alpha-olefin-based monomer may particularly be an aliphatic olefin of 2 to 12 carbon atoms, or 2 to 8 carbon atoms. More particularly, ethylene, propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like may be used, and any one among them or mixtures of two or more thereof may be used.

More particularly, the polypropylene may be any one selected from the group consisting of a polypropylene copolymer, a propylene-alpha-olefin copolymer, and a propylene-ethylene-alpha-olefin copolymer, or mixtures of two or more thereof, and in this case, the copolymer may be a random or block copolymer.

In addition, the melt index (MI) measured at 230°C and a load of 2.16 kg of the polypropylene may be 0.5 g/10 min to 100 g/10 min, and particularly, the melt index (MI) may be 1 g/10 min to 90 g/10 min. If the melt index of the polypropylene is deviated from the range, it is apprehended that defects may arise during injection molding of the thermoplastic resin composition.

Particularly, in the thermoplastic resin composition according to an embodiment of the present invention, the polypropylene may be a copolymer, more particularly, a propylene-ethylene copolymer having a melt index (MI) measured at 230°C and a load of 2.16 kg of 0.5 g/10 min to 100 g/10 min, particularly, 1 g/10 min to 90 g/10 min, more particularly, 2 g/10 min to 50 g/10 min. If the copolymer having such physical properties is included as polypropylene in the above-described amount range, strength properties, particularly, strength properties at room temperature may be improved.

The copolymer may be prepared by using a general preparation reaction of a polymer so as to satisfy the above-described physical property conditions, or may be obtained commercially and used. Particular examples may include SEETE™ M1600 of LG Chem, Co., SFC750D of LOTTE Chemical Co., or the like.

In addition, in the thermoplastic resin composition according to an embodiment of the present invention, the polypropylene may particularly be one or more random propylene copolymers or block propylene copolymers, having a DSC melting temperature in a range of 120°C to 160°C, and a melting flow rate (MFR) measured at 230°C and a load of 2.16 kg according to ASTM-D 1238 in a range of 5 g/10 min to 120 g/10 min, and the propylene copolymer may be included in 1 wt% to 20 wt%, particularly, 1 wt% or more, 2 wt% or more, 3 wt% or more and 15 wt% or less, 13 wt% or less, 12 wt% or less, 11 wt% or less, 10 wt% or less, more particularly, 5 wt% to 10 wt% with respect to the total weight of the resin composition. If the polypropylene having such physical properties is included in the above-described amount range, the mechanical strength of the thermoplastic resin composition including hardness, may be improved. The random propylene copolymer or block propylene copolymer may be prepared so as to satisfy the above-described physical property conditions by using the common preparation reaction of a polymer, or may be obtained commercially and used. Particular examples may include Braskem™ PP R7021-50RNA of Braskem America Inc., Formolene™ 7320A of Formosa Plastics Corporation in America, SFC750D of LOTTE Chemical Co., or the like.

(2) Multiblock copolymer

The resin composition of the present invention may include the above-described multiblock copolymer of the present invention.

The resin composition of the present invention may include the polypropylene and the above-described multiblock copolymer in a weight ratio of 1:0.01 to 1:0.25, may particularly include the polypropylene and the multiblock copolymer in a weight ratio of 1:0.02 to 1:0.22, 1:0.03 to 1:0.22, 1:0.02 to 1:0.21, 1:0.03 to 1:0.21, 1:0.03 to 1:0.18, 1:0.01 to 1:0.12, more particularly, 1:0.05 to 1:0.12.

If the amount of the multiblock copolymer included in the resin composition is too small, impact strength might be degraded, and if the amount of the multiblock copolymer is too large, the flowability of the resin composition may be deteriorated. If the weight ratio of the polypropylene and the multiblock copolymer satisfies the above-described weight ratio, high flow properties may be maintained, and improved low temperature impact strength may be shown.

The resin composition according to an embodiment of the present invention may have a melt flow rate (MFR, 230°C, 2.16 kg) of 1 g/10 min to 15 g/10 min, particularly, 2 g/10 min or more, 3 g/10 min or more, and 14 g/10 min or

less, 12 g/10 min or less, 11 g/10 min or less, more particularly, 4 g/10 min to 10 g/10 min. The melt flow rate is measured under conditions of 230°C and a load of 2.16 kg according to ASTM D 1238.

In addition, the resin composition according to an embodiment of the present invention may have impact strength measured at 0°C of 9 kgf·m/m to 20 kgf·m/m, particularly, 9 kgf·m/m to 18 kgf·m/m, more particularly, 10 kgf·m/m to 15 kgf·m/m.

Since the resin composition of the present invention includes the polypropylene and the multiblock copolymer in the weight ratio, the melt flow rate in the above-described range may be achieved, and at the same time, impact strength measured at 0°C may satisfy the above-described range, and accordingly, excellent processability and high low temperature impact strength may be shown.

Meanwhile, the resin composition according to an embodiment of the present invention may selectively further include an inorganic filler together with the polypropylene and the multiblock copolymer to improve the mechanical properties of the resin composition.

The inorganic filler may particularly be a powder-type filler, a flake-type filler, a fiber-type filler, or a balloon-type filler, and any one among them or a mixture of two or more thereof may be used. Particularly, the powder-type filler may include: natural silicic acid or silicate such as fine powder talc, kaolinite, plastic clay, and sericite; carbonate such as settleable calcium carbonate, heavy calcium carbonate and magnesium carbonate; hydroxide such as aluminum hydroxide and magnesium hydroxide; oxide such as zinc oxide, magnesium oxide and titanium oxide; synthetic silicic acid or silicate such as hydrated calcium silicate, hydrated aluminum silicate, hydrated silicic acid and anhydrous silicic acid; silicon carbide, or the like. In addition, as the flake-type filler, mica, etc. may be included. In addition, as the fiber-type filler, basic magnesium sulfate whisker, calcium titanate whisker, aluminum borate whisker, sepiolite, processed mineral fiber (PMF), potassium titanate, etc. may be included. As the balloon-type filler, glass balloon, etc. may be included. Among them, talc may be used.

In addition, the inorganic filler may be surface treated to improve the strength properties and molding processability of the thermoplastic resin composition.

Particularly, the inorganic filler may be physically or chemically surface treated using a surface treating agent such as a silane coupling agent, a higher fatty acid, a fatty acid metal salt, an unsaturated organic acid, an organic titanate, a resin acid and polyethylene glycol.

In addition, the inorganic filler may have an average particle diameter ($D_{50}$) of 1 um to 20 um, particularly, 3 um to 15 $\mu$m, more particularly, 5 um to 10 um. If the average particle diameter of the inorganic filler is too small, when mixing with the polypropylene and the multiblock copolymer, uniform dispersion is difficult due to the agglomeration of inorganic filler particles, and as a result, the improving effects of the mechanical properties of the resin composition may become insignificant. In addition, if the average particle diameter of the inorganic filler is too large, it is apprehended that the physical properties may be deteriorated due to the deterioration of the dispersibility of the inorganic filler itself.

In the present invention, the average particle diameter ($D_{50}$) of the inorganic filler may be defined as a particle diameter based on 50% of particle diameter distribution. In the present invention, the average particle diameter ($D_{50}$) of the inorganic filler may be measured by, for example, observing electron microscope using scanning electron microscopy (SEM), field emission scanning electron microscopy (FE-SEM), etc., or by a laser diffraction method. In case of measuring by the laser diffraction method, more particularly, the inorganic filler particles are dispersed in a dispersion medium and introduced into a commercially available laser diffraction particle size measurement apparatus (for example, Microtrac MT 3000), and then, an average particle diameter ($D_{50}$) based on 50% of particle diameter distribution in the measurement apparatus may be computed.

The inorganic filler may be included in 0.1 parts by weight to 40 parts by weight with respect to 100 parts by weight of the resin composition. If the amount of the inorganic filler in the resin composition is less than 0.1 parts by weight with respect to 100 parts by weight of the resin composition, improving effects according to the inclusion of the inorganic filler is insignificant, and if the amount is greater than 40 parts by weight, the processability of the resin composition may be deteriorated. More particularly, the inorganic filler may be included in 0.1 parts by weight to 20 parts by weight with respect to the total weight of the resin composition.

The resin composition according to an embodiment of the present invention shows excellent processability and excellent low temperature impact strength simultaneously, and may be usefully utilized for blow molding, extrusion molding or injection molding, particularly, for medical use.

According to another embodiment of the present invention, medical products that are molded articles manufactured using the resin composition satisfying the physical properties may be provided.

The molded article may particularly include a blow molding molded article, an inflation molded article, a cast molded article, an extrusion laminate molded article, an extrusion molded article, a foam molded article, an injection molded article, a sheet, a film, a fiber, a monofilament, or a non-woven fabric.

Method for preparing multiblock copolymer

The method for preparing the multiblock copolymer of the present invention comprises: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer with the polyolefin-based block in the presence of an alkyllithium compound and an amine-based compound to prepare a multiblock copolymer.

Step (S1)

Step (S1) is a step of reacting ethylene and an alpha-olefin-based monomer using an organozinc compound as a chain transfer agent in the presence of a catalyst composition including a transition metal compound to prepare a polyolefin-based compound.

According to an embodiment of the present invention, the transition metal catalyst is a catalyst for propagating an olefin-based polymer through coordination chain transfer polymerization, and may be a catalyst composition including a transition metal catalyst that is a main catalyst and a co-catalyst.

In the present invention, the transition metal compound may be a compound represented by Formula 1 below.

[Formula 1]

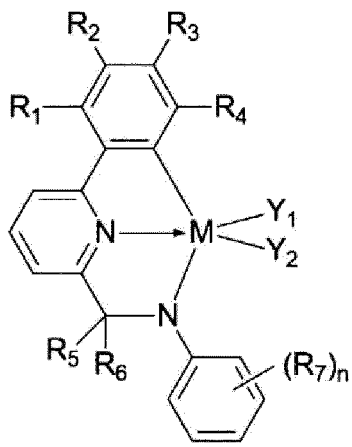

In Formula 1,

M is Ti, Zr or Hf,

$R_1$ to $R_4$ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected to form a ring,

$R_5$ and $R_6$ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is conducted with an alkyl group of 1 to 12 carbon atoms,

each $R_7$ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms,

n is 1 to 5, and

$Y_1$ and $Y_2$ are each independently a halogen group; an alkyl group of 1 to 20 carbon atoms; an alkenyl group of 2 to 20 carbon atoms; an alkynyl group of 2 to 20 carbon atoms; a cycloalkyl group of 3 to 20 carbon atoms; an aryl group of 6 to 20 carbon atoms; an alkylaryl group of 7 to 20 carbon atoms; an arylalkyl group of 7 to 20 carbon atoms; a heteroaryl group of 5 to 20 carbon atoms; an alkoxy group of 1 to 20 carbon atoms; a substituted or unsubstituted aryloxy group of 5 to 20 carbon atoms; an alkylamino group of 1 to 20 carbon atoms; an arylamino group of 5 to 20 carbon atoms; an alkylthio group of 1 to 20 carbon atoms; an arylthio group of 5 to 20 carbon atoms; an alkylsilyl group of 1 to 20 carbon atoms; an arylsilyl group of 5 to 20 carbon atoms; a hydroxyl group; an amino group; a thiol group; a silyl group; a cyano group; or a nitro group.

Particularly, in Formula 1, M may be Hf.

In addition, particularly, in Formula 1, $R_1$ to $R_4$ may be each independently hydrogen; or a substituted or unsubstituted alkyl group of 1 to 20 carbon atoms, where adjacent two or more among them may be connected to form a ring. Alternatively, $R_1$ and $R_2$ may be each independently an alkyl group of 1 to 20 carbon atoms and may be connected with each other to form an aromatic ring of 5 to 20 carbon atoms, and $R_3$ and $R_4$ may be hydrogen.

In addition, particularly, in Formula 1, $R_5$ and $R_6$ are each independently hydrogen; or a substituted or unsubstituted aryl group of 6 to 20 carbon atoms, where the substitution is with an alkyl group of 1 to 6 carbon atoms.

In addition, particularly, in Formula 1, each $R_7$ may be independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms.

Particularly, in Formula 1, n may be 1 to 3, preferably, 2.

Particularly, in Formula 1, $Y_1$ and $Y_2$ may be each independently an alkyl group of 1 to 20 carbon atoms.

More particularly, the transition metal compound represented by Formula 1 may be a compound represented by Formula 1a below.

[Formula 1a]

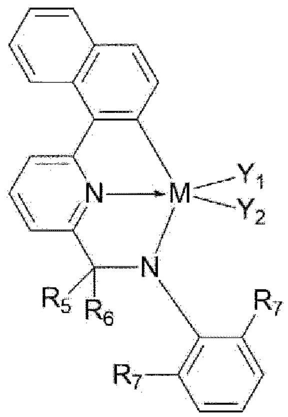

In Formula 1a,

M, $R_5$ to $R_7$, $Y_1$ and $Y_2$ are the same as defined above.

The transition metal compound represented by Formula 1 may particularly be selected from the compounds below, but is not limited thereto, and all transition metal compounds corresponding to Formula 1 are included in the present invention.

[Formula 1-1]

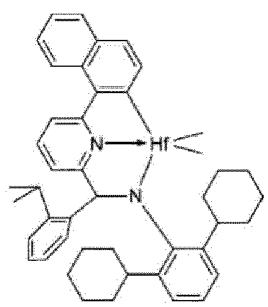

[Formula 1-2]

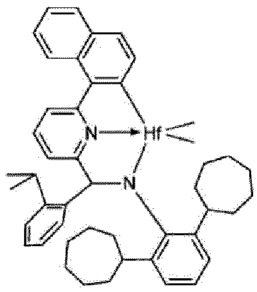

[Formula 1-3]

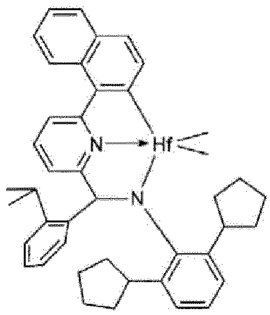

[Formula 1-4]

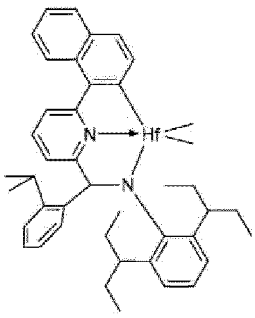

[Formula 1-5]

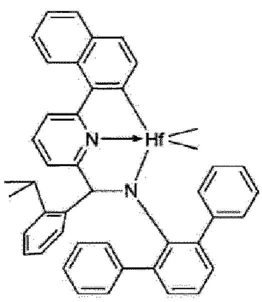

[Formula 1-6]

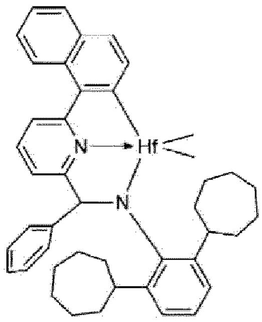

[Formula 1-7]

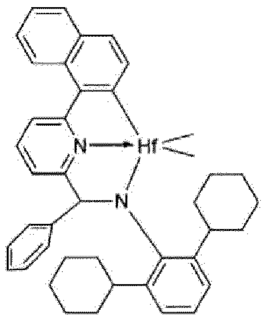

[Formula 1-8]

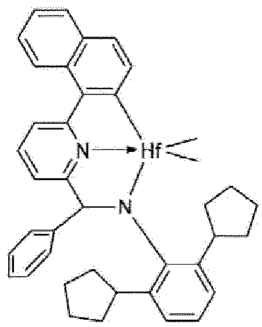

In addition, the present invention provides a ligand compound represented by Formula 2 below.

[Formula 2]

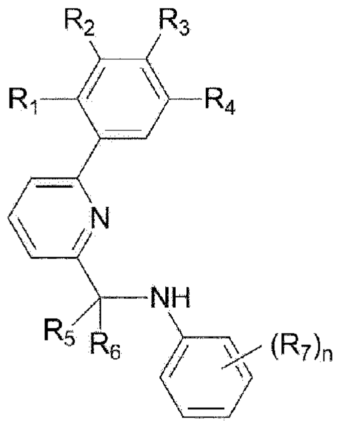

In Formula 2,

$R_1$ to $R_4$ are each independently a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected with each other to form a ring,
$R_5$ and $R_6$ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is with an alkyl group of 1 to 12 carbon atoms,
each $R_7$ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms, and
n is 1 to 5.

That is, the transition metal compound of the present invention may be prepared by including a step of reacting a ligand compound represented by Formula 2 below and a compound represented by Formula 3.

[Formula 2]

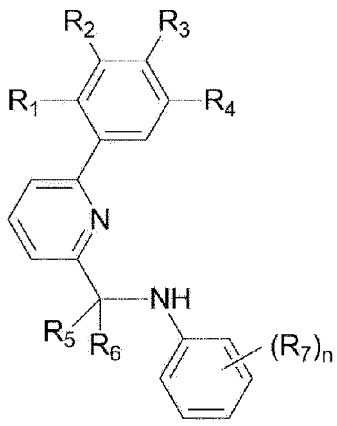

[Formula 3] $M(Y_1Y_2)_2$

In the above formulae,
$R_1$ to $R_7$, M, $Y_1$ and $Y_2$ are the same as defined above.
Meanwhile, during preparing the transition metal compound represented by Formula 1 of the present invention, reactions may be performed by a process below.

[Reaction 1]

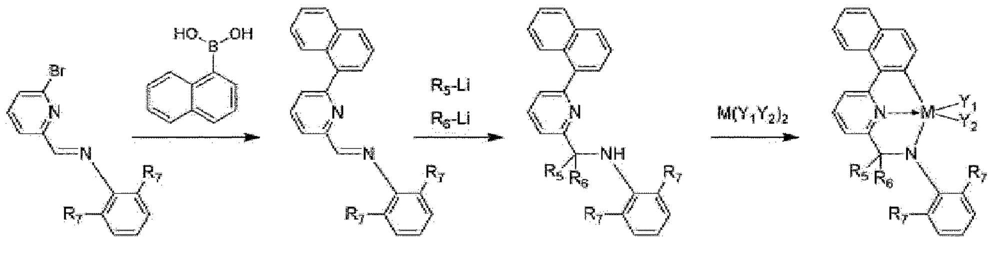


[Reaction 2]

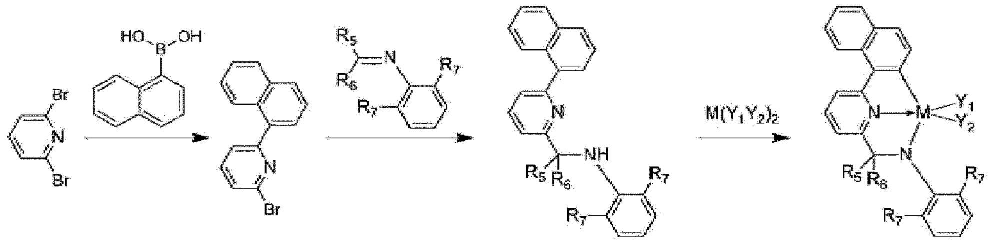


In the present invention, the organozinc compound is used as a chain transfer agent and is a material inducing the preparation of a copolymer by performing chain transfer during the preparation in polymerization reaction, and the chain transfer agent may be a chain transfer agent for preparing a block copolymer by coordination chain transfer polymerization.

In an embodiment of the present invention, the chain transfer agent may include an organozinc compound represented by Formula 5 below, and particularly, the chain transfer agent may include the organozinc compound represented by Formula 5 below in 96 mol% or more, preferably, may not include by-products other than the organozinc compound represented by Formula 5.

[Formula 5]

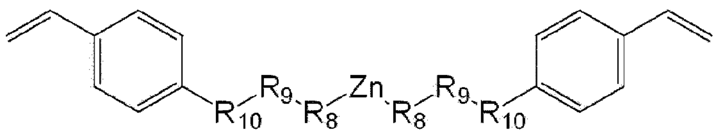

In Formula 5,

$R_8$ and $R_{10}$ are each independently a single bond or an alkylene group of 1 to 10 carbon atoms, $R_9$ is an alkylene group of 1 to 10 carbon atoms or $-SiR_{11}R_{12}-$, and $R_{11}$ and $R_{12}$ are each independently an alkyl group of 1 to 10 carbon atoms.

In addition, according to an embodiment of the present invention, in Formula 5, $R_8$ and $R_{10}$ may be each independently a single bond or an alkylene group of 1 carbon atom, $R_9$ may be an alkylene group of 1 carbon atom or $-SiR_{11}R_{12}-$, and $R_{11}$ and $R_{12}$ may be each independently an alkyl group of 1 carbon atom.

According to an embodiment of the present invention, the organozinc compound represented by Formula 5 may be one selected from the group consisting of organozinc compounds represented by Formula 5-1 to Formula 5-4, preferably, any one among Formula 5-3 and Formula 5-4 below.

[Formula 5-1]

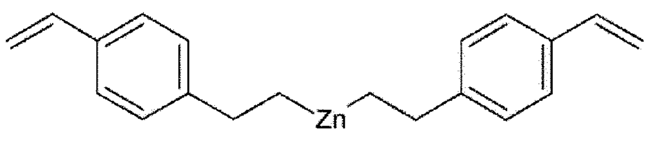

[Formula 5-2]

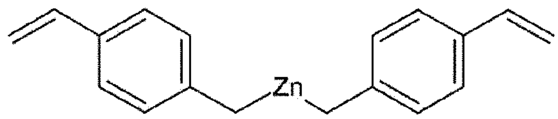

[Formula 5-3]

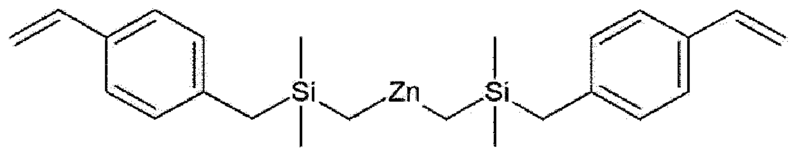

[Formula 5-4]

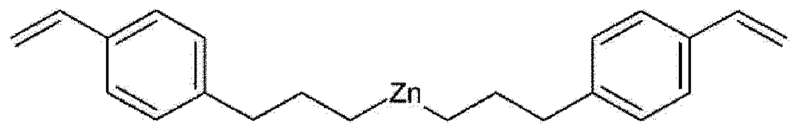

According to an embodiment of the present invention, the chain transfer agent may preferably include the organozinc compound of Formula 5 in 97 mol% or more, preferably, 98 mol% or more, or 99 mol% or more. Most preferably, by-products other than the organozinc compound may be not included. This means that impurities including chlorine or magnesium are not included either as well as the by-products such as a dimer other than the organozinc compound represented by Formula 5. That is, the chain transfer agent may include only the organozinc compound represented by Formula 5.

If ethylene and an alpha-olefin-based monomer are reacted using the organozinc compound of Formula 5 as a chain transfer agent in the presence of a catalyst composition including a transition metal compound, polymerization may be performed with the insertion of the ethylene and the alpha-olefin-based monomer between zinc (Zn) and $R_{10}$ of the organozinc compound. In an embodiment of the method of preparing a multiblock copolymer of the present invention, if the compound of Formula 5 is used as the organozinc compound for the reaction of ethylene and an alpha-olefin-based monomer to prepare a polyolefin-based block, an olefin-based polymer block intermediate may be prepared, and an example of the olefin-based polymer block intermediate may be represented by Formula 6.

[Formula 6]

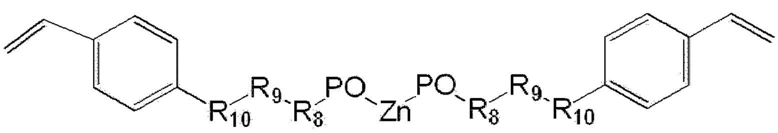

In Formula 6, $R_8$ and $R_{10}$ may be each independently a single bond or an alkylene group of 1 to 10 carbon atoms, $R_9$ may be an alkylene group of 1 to 10 carbon atoms or $-SiR_{11}R_{12}-$, $R_{11}$ and $R_{12}$ are each independently an alkyl group of 1 to 10 carbon atoms, and PO may be an olefin-based polymer block.

According to an embodiment of the present invention, the organozinc compound may be prepared by a preparation method including: a step of preparing a Grignard reagent containing a styrene residual group; and a step of reacting the Grignard reagent thus prepared with a zinc compound to prepare the organozinc compound represented by Formula 5, and the zinc compound may be alkyl zinc alkoxide.

According to an embodiment of the present invention, the organozinc compound prepared by the preparation method of the organozinc compound and represented by Formula 5 is synthesized into a single compound, does not include by-products such as a dimer, and further, does not include impurities including chlorine, for example organozinc chloride (R-Zn-Cl) that may act as a catalyst poison. In addition, if the organozinc compound represented by Formula 5 is prepared according to the preparation method of the organozinc compound, a single compound is synthesized, and effects of excellent synthesis reproduction may be achieved. Meanwhile, in preparing the organozinc compound, as in the present invention, in order to exclude by-products and impurities, it may be important to select the Grignard reagent

containing a styrene residual group and the zinc compound.

According to an embodiment of the present invention, the Grignard reagent containing a styrene residual group may be represented by Formula 7 below.

[Formula 7]

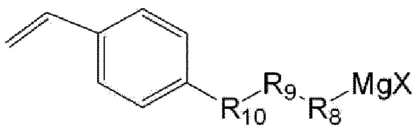

In Formula 7, $R_8$ and $R_{10}$ may be each independently a single bond or an alkylene group of 1 to 10 carbon atoms, $R_9$ may be an alkylene group of 1 to 10 carbon atoms or $-SiR_{11}R_{12}-$, $R_{11}$ and $R_{12}$ may be each independently an alkyl group of 1 to 10 carbon atoms, and X may be a halogen group.

In addition, according to an embodiment of the present invention, in Formula 7, $R_8$ and $R_{10}$ may be each independently a single bond or an alkylene group of 1 carbon atom, $R_9$ may be an alkylene group of 1 carbon atom or $-SiR_{11}R_{12}-$, and $R_{11}$ and $R_{12}$ may be each independently an alkyl group of 1 carbon atom.

According to an embodiment of the present invention, the Grignard reagent containing a styrene residual group, represented by Formula 7 may be one selected from the group consisting of Grignard reagents containing a styrene residual group, represented by Formulas 7-1 to 7-4 below.

[Formula 7-1]

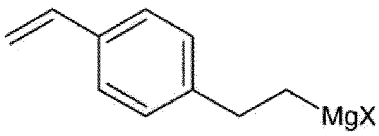

[Formula 7-2]

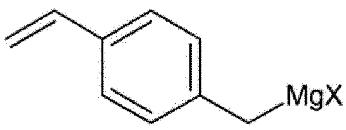

[Formula 7-3]

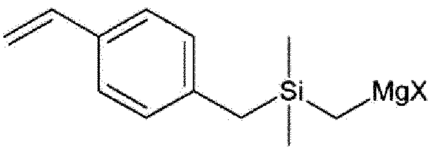

[Formula 7-4]

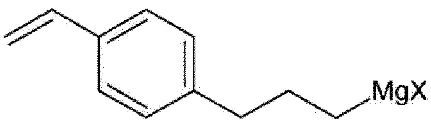

According to an embodiment of the present invention, the Grignard reagent containing a styrene residual group, represented by Formula 7 may be prepared through the reaction of a halide (-X) substituted with $R_8$ and magnesium, particularly, a magnesium powder or a magnesium metal.

According to an embodiment of the present invention, the Grignard reagent containing a styrene residual group, represented by Formula 7 may be prepared through the reaction of a compound represented by Formula 8 below and magnesium, particularly, a magnesium powder or a magnesium metal.

[Formula 8]

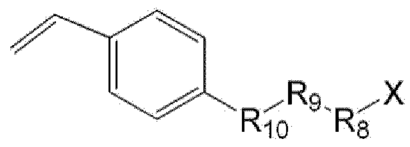

In Formula 8, $R_8$ and $R_{10}$ may be each independently a single bond or an alkylene group of 1 to 10 carbon atoms, $R_9$ may be an alkylene group of 1 to 10 carbon atoms or $-SiR_{11}R_{12}-$, $R_{11}$ and $R_{12}$ may be each independently an alkyl group of 1 to 10 carbon atoms, and X may be a halogen group.

According to an embodiment of the present invention, in Formula 8, $R_8$ and $R_{10}$ may be each independently a single bond or an alkylene group of 1 to 3 carbon atoms, $R_9$ may be an alkylene group of 1 to 3 carbon atoms or $-SiR_{11}R_{12}-$, $R_{11}$ and $R_{12}$ may be each independently an alkyl group of 1 to 3 carbon atoms, and X may be a halogen group.

In addition, according to an embodiment of the present invention, in Formula 8, $R_8$ and $R_{10}$ may be each independently a single bond or an alkylene group of 1 carbon atom, $R_9$ may be an alkylene group of 1 carbon atom or $-SiR_{11}R_{12}-$, $R_{11}$ and $R_{12}$ may be each independently an alkyl group of 1 carbon atom, and X may be a halogen group selected from the group consisting of Cl, Br and I.

According to an embodiment of the present invention, the compound represented by Formula 8 may be one selected from the group consisting of the compounds represented by Formulas 8-1 to 8-4 below.

[Formula 8-1]

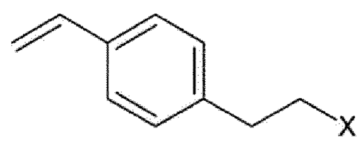

[Formula 8-2]

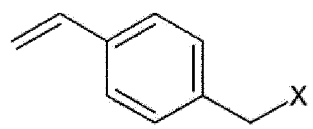

[Formula 8-3]

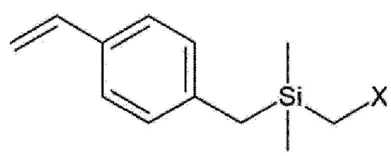

[Formula 8-4]

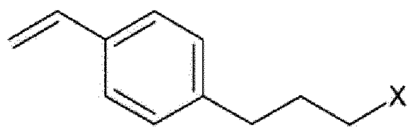

According to an embodiment of the present invention, when preparing the Grignard reagent containing a styrene

residual group, represented by Formula 7, the reaction of the compound represented by Formula 8 with the magnesium powder or magnesium metal may be performed with an excessive molar ratio, i.e., a molar ratio greater than 1 mol of the magnesium powder or magnesium metal in contrast to 1 mol of the compound represented by Formula 8 based on may be used, and in this case, 50 mol% or more, 60 mol% or more, 70 mol% or more, 80 mol% or more, 90 mol% or more, 95 mol% or more, or 99 mol% or more of the compound represented by Formula 8 may be converted to a Grignard reagent containing a styrene residual group, represented by Formula 7.

According to an embodiment of the present invention, the reaction of the compound represented by Formula 8 and the magnesium powder or magnesium metal may be performed in a molar ratio of greater than 1:1 to 1:10, greater than 1:1 to 1:5, greater than 1:1 to 1:2, or 1:1.01 to 1:1.60 based on a molar ratio, and within this range, the conversion ratio to the Grignard reagent containing a styrene residual group, represented by Formula 7 may be high, the remaining magnesium content after the reaction may be minimized, and the removal of remaining magnesium powder or magnesium metal may be easy.

According to an embodiment of the present invention, in preparing an organozinc compound, the zinc compound is required to be a zinc compound that may induce substitution with the same two organic groups at zinc. Accordingly, zinc chloride ($ZnCl_2$) may be easily considered, but if zinc chloride is used as the zinc compound, there are problems of remaining impurities including chlorine (for example, alkyl zinc chloride), that may act as a catalyst poison. Accordingly, in the present invention, alkyl zinc alkoxide is used as the zinc compound.

According to an embodiment of the present invention, the alkyl group of the alkyl zinc alkoxide may be an alkyl group of 1 to 10 carbon atoms, an alkyl group of 1 to 5 carbon atoms, an alkyl group of 1 to 3 carbon atoms, or an ethyl group, and the alkoxide group may be an alkoxide group of 1 to 10 carbon atoms, an alkoxide group of 1 to 5 carbon atoms, an alkoxide group of 1 to 3 carbon atoms, or a methoxide group. In a particular embodiment, the zinc compound may be ethyl zinc methoxide.

According to an embodiment of the present invention, the alkyl zinc alkoxide may be prepared from dialkyl zinc. In a particular embodiment, the alkyl zinc alkoxide may be prepared by reacting dialkyl zinc and an alcohol in situ. In this case, the alkyl group of the dialkyl zinc may be the same as the above-described alkyl group of the alkyl zinc alkoxide, and the alcohol may be an alcohol in which hydrogen is bonded to the alkoxide group of the alkyl zinc alkoxide.

According to an embodiment of the present invention, if the alkyl zinc alkoxide is used as the zinc compound, halogenated magnesium alkoxide is produced during the reaction of the Grignard reagent and the zinc compound, and since this is an insoluble salt, filtering is easy, thereby preventing the remaining of impurities.

According to an embodiment of the present invention, the reaction of the Grignard reagent and the zinc compound may be performed in a molar ratio of 10:1 to 1:10, 5:1 to 1:5, 3:1 to 1:3, 2:1 to 1:2, 1.5:1 to 1:1.5, or 1:1 based on a molar ratio, and within this range, a single compound may be synthesized, by-products such as a dimer may be excluded, impurities containing chlorine that may act as a catalyst poison may be excluded, and the removal of impurities including magnesium that may act as a catalyst poison may be easy.

According to an embodiment of the present invention, all steps and all reactions of the preparation method of the zinc compound may be performed in an organic solvent, and the reaction temperature and the reaction pressure may be controlled according to the purpose of increasing yield and purity.

In the preparation method of the zinc compound according to an embodiment of the present invention, the catalyst poison may be completely removed by replacing the conventional borane-based compound containing a styrene residual group with the Grignard reagent containing a styrene residual group, and by replacing alkyl zinc or zinc chloride with alkyl zinc alkoxide.

In addition, through the improvement of the method, different from the conventional method obtaining a mixture of a dimer, a trimer and a zinc compound of which terminal is saturated as a product, a compound in a monomer type of which terminal vinyl is completely conserved could be obtained as a single compound. Accordingly, the storage stability of the zinc compound may be improved, the physical properties of a final copolymer may be improved, and the production amount of a diblock not a triblock copolymer could be markedly reduced.

In addition, the catalyst composition may further include a compound represented by Formula 9 below, and the compound represented by Formula 9 may play the roles of both a co-catalyst and a scavenger.

[Formula 9] $-[Al(R_a)-O]_m-$

In Formula 9,

each $R_a$ is independently a halogen radical; a hydrocarbyl radical of 1 to 20 carbon atoms; or a halogen-substituted hydrocarbyl radical of 1 to 20 carbon atoms, and
m is an integer of 2 or more.

The compound represented by Formula 9 is not specifically limited as long as it is alkylaluminoxane. Preferred

examples may be modified methylaluminoxane (MMAO), methylaluminoxane (MAO), ethylaluminoxane, isobutylaluminoxane, butylaluminoxane, etc., and particularly preferable compound may be modified methylaluminoxane (MMAO).

The compound represented by Formula 9 is a compound of an oligomer type produced by the reaction of alkylaluminum with water, and if used as a cocatalyst, chain transfer may be reduced. Accordingly, a copolymer having a high molecular weight may be prepared, and the production of homo-polyolefin by side reactions may be prevented. Accordingly, finally, a polyolefin-polystyrene-based multiblock copolymer showing excellent physical properties such as high tensile strength may be prepared.

Meanwhile, the compound represented by Formula 9 may suppress chain transfer as described above, on the contrary, for example, if a compound like alkylaluminum is used as a co-catalyst, chain transfer occurs a lot, the molecular weight of a copolymer may be reduced, the production of a homo-polyolefin may increase, and problems of degrading the physical properties of a block copolymer may be generated.

Like this, by using the transition metal compound represented by Formula 1 and the compound represented by Formula 9 in combination in the present invention, the multiblock copolymer satisfying the above-described conditions may be prepared.

In addition, the transition metal compound represented by Formula 1 and the compound represented by Formula 9 may be used in a supported type by a support. As the support, silica or alumina may be used, without limitation.

In addition, the catalyst composition may further include a compound represented by Formula 10 below.

[Formula 10] $[L\text{-}H]^+[Z(A)_4]^-$ or $[L]^+[Z(A)_4]^-$

In Formula 10,

Z is an element in group 13,
each A is independently aryl of 6 to 20 carbon atoms where one or more hydrogen atoms may be substituted with substituents; or alkyl of 1 to 20 carbon atoms, and
the substituent of A is halogen; hydrocarbyl of 1 to 20 carbon atoms; alkoxy of 1 to 20 carbon atoms; or aryloxy of 6 to 20 carbon atoms.

For example, step (S1) may be performed in a homogenous solution state. In this case, a hydrocarbon solvent may be used as a solvent, or the olefin monomer itself may be used as a medium. The hydrocarbon solvent may include an aliphatic hydrocarbon solvent of 4 to 20 carbon atoms, particularly, isobutane, hexane, cyclohexane, methylcyclohexane, or the like. The solvent may be used alone, or mixtures of two or more thereof may be used.

The polymerization temperature of step (S1) may change according to the reaction material, reaction conditions, or the like, and may particularly be 70 to 170°C, particularly, 80 to 150°C, or 90 to 120°C. Within the aforementioned range, the solubility of a polymer may increase, and the catalyst may be thermally stabilized.

The polymerization in step (S1) may be performed by a batch type, a semi-continuous type or a continuous type, or may be performed by two or more steps having different reaction conditions.

The compound prepared by the above-described step (S1) may play the role of a precursor for preparing the polyolefin-polystyrene-based multiblock copolymer of the present invention by anionic polymerization reaction of step (S2), which will be explained later.

In an embodiment of the present invention, the alpha-olefin-based monomer may be an alpha-olefin of 5 to 20 carbon atoms, particularly, alpha-olefin of 5 to 14 carbon atoms.

In an embodiment of the present invention, as an example of the alpha-olefin, one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-icosene, 4,4-dimethyl-1-pentene, 4,4-diethyl-1-hexene and 3,4-dimethyl-1-hexene, may be included, more particularly, 1-hexene.

Step (S2)

Step (S2) is a step of reacting an aromatic vinyl-based monomer with the polyolefin-based block to prepare a multiblock copolymer.

In step (S2), an aromatic vinyl-based monomers may be continuously inserted between the zinc-carbon bonds of $(\text{polyolefinyl})_2Zn$ included in the compound formed by step (S1) to form a polystyrene-based chain, and at the same time, styrene groups derived from a chain extender present at the terminal of the compound formed by step (S1) may participate as a copolymer moiety with the aromatic vinyl-based monomer to be connected with a polystyrene chain. In addition, the multiblock copolymer produced through the process may be easily quenched through the reaction of terminal group with water, oxygen or an organic acid, and through this, conversion into a polyolefin-polystyrene-based multiblock copolymer which is industrially useful may be achieved.

The aromatic vinyl-based monomer may be an aromatic vinyl-based monomer of 6 to 20 carbon atoms. For example, an aromatic vinyl-based monomer including an ethylene substituted with an aryl group of 6 to 20 carbon atoms, an ethylene substituted with a phenyl group, or the like, for example, styrene, α-methylstyrene, vinyltoluene, alkyl styrene substituted with $C_{1-3}$ alkyl (for example, o-methylstyrene, m-methylstyrene, p-methylstyrene, p-ethylstyrene, or the like) or halogen-substituted styrene, more particularly, styrene may be used.

In an embodiment of the present invention, the anionic polymerization initiator may be an alkyllithium compound represented by Formula 11 below.

[Formula 11]

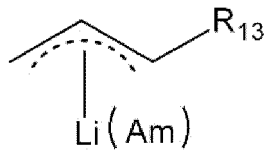

In Formula 11,

$R_{13}$ is hydrogen or a hydrocarbon group of 1 to 20 carbon atoms,
Am is an amine-based compound represented by Formula 12 below,

[Formula 12]

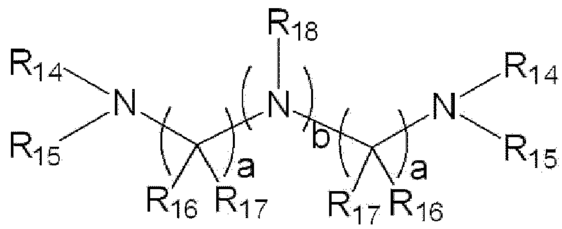

In Formula 12,

$R_{14}$ to $R_{18}$ are each independently hydrogen or a hydrocarbon group of 1 to 20 carbon atoms, and
a and b are each independently an integer of 0 to 3, where a and b are not 0 at the same time.

In an embodiment of the present invention, $R_{13}$ may be hydrogen, alkyl of 1 to 20 carbon atoms, cycloalkyl of 3 to 20 carbon atoms, or a substituted or unsubstituted arylalkyl of 7 to 20 carbon atoms;

$R_{14}$ to $R_{18}$ may be each independently hydrogen, alkyl of 1 to 20 carbon atoms, alkenyl of 1 to 20 carbon atoms, cycloalkyl of 3 to 20 carbon atoms, a substituted or unsubstituted aryl of 6 to 20 carbon atoms, or a substituted or unsubstituted arylalkyl of 7 to 20 carbon atoms; and
a and b may be each independently an integer of 0 to 2.

In addition, in an embodiment of the present invention, $R_{13}$ to $R_{18}$ may be each independently hydrogen or alkyl of 1 to 20 carbon atoms; a is 1 or 2, and b may be 0 or 1.

Particularly, a is an integer of 1 to 3, b may be an integer of 0 to 3, more particularly, a is 1 or 2, b may be an integer of 0 to 2, more particularly, a is 1 or 2, and b may be 0 or 1.

In an embodiment of the present invention, Am in Formula 11 may be represented by Formula 13 or 14 below.

[Formula 13]

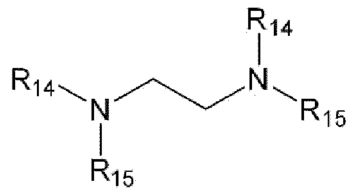

[Formula 14]

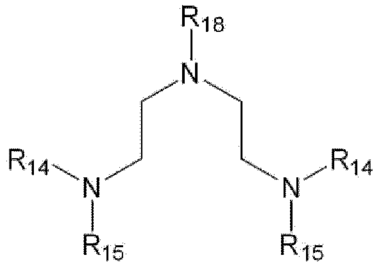

In the formulas,

$R_{14}$, $R_{15}$ and $R_{18}$ are each independently hydrogen or alkyl of 1 to 20 carbon atoms.

In addition, in an embodiment of the present invention, Am in Formula 11 may particularly be represented by Formula 13a or Formula 14a below.

[Formula 13a]

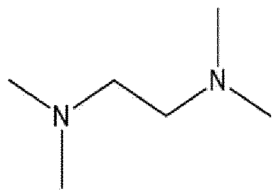

[Formula 14a]

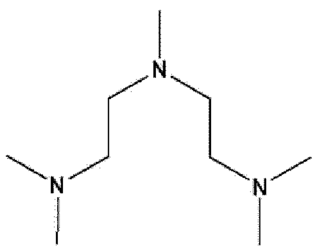

In the preparation method of the multiblock copolymer of the present invention, the compound represented by Formula 11 is used as an anionic polymerization initiator, and a polystyrene-based chain may be propagated from the organozinc compound prepared in step S1, particularly, the polyolefin of (polyolefinyl)$_2$Zn in which a polyolefin-based chain is propagated with zinc (Zn) as a center. Like this, by the preparation method of the multiblock copolymer of the present invention, polystyrene-based chains may be propagated at both terminals of the polyolefin chain to prepare a polystyrenepolyolefin-polystyrene multiblock copolymer, and the multiblock copolymer thus prepared may show a structure close to symmetry, and may have a uniform polystyrene domain size.

The anionic polymerization initiator may be prepared by a preparation method below.

The preparation method of the anionic polymerization initiator includes a process of injecting and reacting a

compound represented by Formula 16 and a compound represented by Formula 12 in the presence of a compound represented by Formula 15.

[Formula 12]

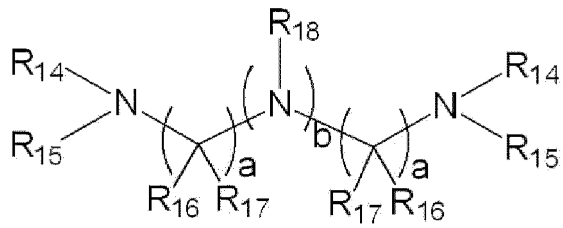

[Formula 15] B-Li

[Formula 16]

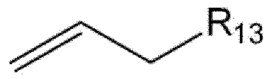

In the formulas,

$R_{13}$ to $R_{18}$ are each independently hydrogen or a hydrocarbon group of 1 to 20 carbon atoms;
a and b are each independently an integer of 0 to 3, where a and b are not 0 at the same time; and
B is alkyl of 1 to 20 carbon atoms.

In an embodiment of the present invention, $R_{13}$ may be hydrogen or a hydrocarbon group of 1 to 20 carbon atoms; $R_{14}$ to $R_{18}$ may be each independently hydrogen, alkyl of 1 to 20 carbon atoms, alkenyl of 1 to 20 carbon atoms, cycloalkyl of 3 to 20 carbon atoms, substituted or unsubstituted aryl of 6 to 20 carbon atoms, or substituted or unsubstituted arylalkyl of 7 to 20 carbon atoms; a and b may be each independently an integer of 0 to 2; and B may be alkyl of 1 to 12 carbon atoms.

In addition, in an embodiment of the present invention, $R_{14}$ to $R_{18}$ are each independently hydrogen or alkyl of 1 to 20 carbon atoms; a is an integer of 1 or 2, and b may be an integer of 0 or 1; and B may be alkyl of 1 to 8 carbon atoms.

Particularly, a is an integer of 1 to 3, b may be an integer of 0 to 3, more particularly, a is 1 or 2, and b may be an integer of 0 to 2, more particularly, a is 1 or 2, and b may be 0 or 1.

The alkyllithium compound represented by Formula 11 may be, for example, n-BuLi, and n-BuLi is a material widely used as an initiator of anionic polymerization, is easy to get, and has excellent unit price efficiency.

In the preparation method of the anionic polymerization initiator, a process of reacting the compound represented by Formula 15 with the compound represented by Formula 16 may be performed firstly, and then, by reacting with the compound of Formula 12, the compound represented by Formula 11 may be prepared. Particularly, by reacting the compound represented by Formula 15 with the compound represented by Formula 16, allyllithium may be formed as an intermediate, and the allyllithium may react with the compound of Formula 12 to finally form the anionic polymerization initiator of Formula 11.

In addition, the process of injecting and reacting the compound represented by Formula 16 and the compound represented by Formula 12 in the presence of the compound represented by Formula 15, may be performed in conditions without an additional solvent. The conditions without an additional solvent mean the absence of a separate compound that may be a solvent, other than the compound represented by Formula 15 and the compound represented by Formula 12, or the presence of a small amount that does not arise significant reaction with the compound of Formula 15 in the presence of the compound represented by Formula 16.

If the reaction is performed in conditions without an additional solvent, the reaction of the compound represented by Formula 15 with the compound represented by Formula 16 may be performed as the main reaction, and the anionic polymerization initiator of Formula 11 may be effectively prepared. If a separate solvent is present, the anionic polymerization initiator of Formula 11, a compound produced by the reaction of the compound represented by Formula 15 and the compound represented by Formula 12, and a decomposed compound of the compound produced by the reaction of the compound represented by Formula 15 and the compound represented by Formula 12, may be present as a mixture, ineffectively.

Preparation method of resin composition

In addition, the present invention provides a preparation method of the resin composition.

The resin composition of the present invention includes a step of mixing a multiblock copolymer prepared by the preparation method of the multiblock copolymer and polypropylene in a weight ratio of 1:0.01 to 1:0.25.

In the preparation method of the resin composition of the present invention, the preparation method of the multiblock copolymer is the same as described above, and the configuration of the resin composition is also the same as described above.

The resin composition according to an embodiment of the present invention, satisfying the configuration and amount conditions as described above, may be prepared by mixing the multiblock copolymer, polypropylene and selectively an inorganic filler, and then, heating. In this case, the type and amount of the polypropylene are the same as described above.

The mixing process may be performed by a common method. Particularly, the mixing may be performed using a super mixer or a ribbon mixer.

In addition, during performing the mixing process, an additive such as an antioxidant, a thermal stabilizer, a ultraviolet stabilizer, and an antistatic agent may be further included as necessary, and a small amount of an adhesive resin or an additive having a polar group may be selectively further used in a suitable amount range to improve coatability.

In addition, the heating process may be performed at a temperature of the melting point of the polypropylene or higher, and 210°C or less. The heating process may be performed using various common blending machines such as a twin-screw extruder, a single-screw extruder, a roll-mill, a kneader and a banbury mixer.

**Examples**

Hereinafter, the present invention will be explained in more detail referring to embodiments. However, the embodiments are for illustrating the present invention, and the scope of the present invention is not limited thereto.

**Reagents and experimental conditions**

All experiments were performed under an inert atmosphere using a standard glove box and Schlenk technique. Toluene, hexane and tetrahydrofuran (THF) were distilled with benzophenone ketyl and used. Methylcyclohexane (anhydrous grade) used for polymerization reaction was purchased from Tokyo Chemical Industry (TCI), purified with a Na/K alloy, and used. $HfCl_4$ of sublimation grade was purchased from Streme and used as it was. An ethylene-propylene gas mixture was purified with trioctylaluminum (0.6 M in a mineral spirits) in a bomb reactor (2.0 L).

$^1H$ NMR (600 MHz) and $^{13}C$ NMR (150 MHz) spectrums were recorded using an ECZ 600 apparatus (JOEL).

GPC data were analyzed in 1,2,4-trichlorobenzene at 160°C using a PL-GPC 220 system equipped with a refractive index detector and two columns (Plarian Mixed-B 7.5 × 300 mm Varian [Polymer Lab]).

(1) Preparation of transition metal compound

[Formula 1-1]

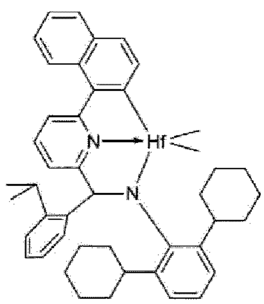

(i) Preparation of ligand compound

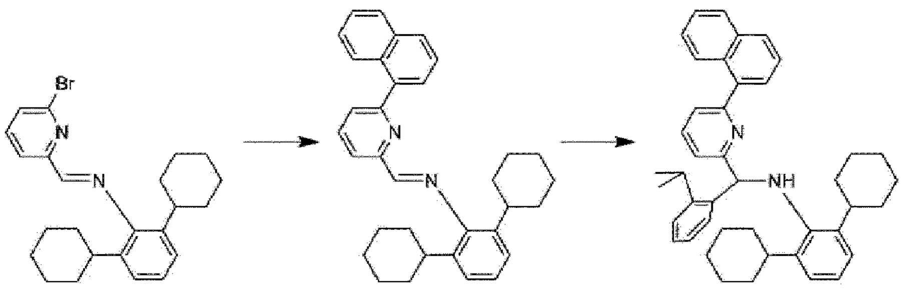

2,6-dicyclohexylaniline (0.772 g, 3.00 mmol) and 6-bromo-2-pyridinecarboxaldehyde (0.558 g, 3.00 mmol) were dissolved in toluene (5 mL), and molecular sieves were injected thereto. The mixture thus obtained was heated to 70°C while stirring overnight. After filtering, the solvent was removed using a rotary evaporator. A yellow solid was obtained (1.07 g, 84%).

$^1$H NMR($C_6D_6$): δ 8.41 (s, 1H, NCH), 8.09(d, *J* = 7.8 Hz, 1H), 7.53(m, 3H), 6.85(d, *J* = 7.8 Hz, 1H), 6.63(t, *J* = 7.8 Hz, 1H), 2.74(m, 2H), 1.87(d, *J* = 12 Hz, 4H), 1.64(d, *J* = 12.6 Hz, 4H), 1.54(d, *J* = 10.8 Hz, 2H), 1.39(quartet, *J* = 10.2 Hz, 4H), 1.11(m, 6H) ppm.

$^{13}$C NMR($C_6D_6$): δ 26.55, 27.33, 34.25, 39.30, 119.42, 124.32, 125.21, 129.83, 136.68, 138.82, 142.54, 148.94, 155.95, 162.06 ppm.

HRMS(EI): *m/z* calcd([M$^+$] $C_{24}H_{29}BrN_2$) 424.1514. Found: 424.1516.

Under nitrogen, a schlenk flask was filled with the compound (1.07 g, 2.51 mmol), 1-naphthylboronic acid (0.453 g, 2.64 mmol), $Na_2CO_3$ (0.700 g, 6.60 mmol), and toluene (5 mL) . Deaerated $H_2O$/EtOH (1 mL, v/v, 1:1) and a solution of $(Ph_3P)_4Pd$ (7.83 mg, 0.00678 mmol) in toluene (1 mL) were injected. By column chromatography on silica gel using hexane and ethyl acetate containing a small amount of triethylamine (*v/v,* 90:3:1), a lemon yellow oil was obtained (0.712 g, 60%).

$^1$H NMR($C_6D_6$): δ 8.70 (s, 1H, NCH), 8.41(d, *J* = 7.8 Hz, 1H), 8.31(d, *J* = 7.8 Hz, 1H), 7.68(d, *J* = 7.2 Hz, 1H), 7.65(d, *J* = 7.8 Hz, 1H), 7.54(d, *J* = 7.2 Hz, 1H), 7.27(m, 4H), 7.20(m, 4H), 2.93(m, 2H), 1.90(d, *J* = 12 Hz, 4H), 1.61(d, *J* = 13.2 Hz, 4H), 1.50(d, *J* = 12.6 Hz, 2H), 1.38(m, 4H), 1.11(m, 6H), ppm.

$^{13}$C NMR($C_6D_6$): δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS(EI): *m/z* calcd([M$^+$] $C_{34}H_{36}N_2$) 472.2878. Found: 472.2878.

2-isopropylphenyllithium (0.114 g, 0.904 mmol) dissolved in diethyl ether (8 mL) was added dropwisely to a schlenk flask containing the compound (0.247, 0.523 mmol) in diethyl ether (20 mL). After stirring for 3 hours, an aqueous solution (10 mL) of ammonium chloride (0.30 g) was added, and the product was extracted with diethyl ether (3 × 10 mL). The oil thus produced was dried at 60°C overnight under high vacuum. A yellow solid was obtained (0.257 g, 83%).

$^1$H NMR ($C_6D_6$): δ 8.24 (m, 1H), 7.90 (m, 1H), 7. 64 (m, 1H), 7.62(d, *J* = 7.8 Hz, 1H), 7.56(d, *J* = 7.2 Hz, 1H), 7.26(m, 3H), 7.22(m, 4H), 7.11(m, 5H), 5.62(d, *J* = 5.4 Hz, 1H, NCH), 4.59(d, *J* = 5.4 Hz, 1H, NH), 3.31(septet, *J* = 7.2 Hz, 1H,CH), 2.74(m, 2H), 1.79(d, *J* = 7.8 Hz, 2H), 1.64 (m, 4H), 1.54(m, 4H), 1.32(m, 4H), 1.08(m, 2H), 1.03(d, *J* = 6.6 Hz, 3H, $CH_3$), 1.00(m, 1H), 0.980(d, *J* = 6.6 Hz, 3H, $CH_3$), 0.921(m, 3H) ppm.

$^{13}$C NMR($C_6D_6$): δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS(EI): *m/z* calcd([M$^+$] $C_{43}H_{48}N_2$) 592.3817. Found: 592.3819.

(ii) Preparation of transition metal compound

A schlenk flask was filled with the ligand compound (0.150 g, 0.253 mmol) in toluene (1.5 g), and n-BuLi (0.17 mL, a 1.6 M solution in hexane, 0.27 mmol) was added thereto dropwisely at room temperature. After stirring for 1 hour, $HfCl_4$ (0.0814 g, 0.254 mmol) was added thereto as a solid. The reaction mixture was heated at 100°C and stirred for 2 hours. After cooling, MeMgBr (0.29 mL, a 3.1 M solution in diethyl ether, 0.89 mmol) was injected and stirred at room temperature overnight. After removing volatile materials via a vacuum line, the product was extracted with toluene (1.5 g). The extract was filtered by celite filtering. The solvent was removed via a vacuum line, and the residue was triturated in hexane (2 mL) to obtain a yellow solid (0.128 g, 63%).

$^1$H NMR ($C_6D_6$): δ 8.58(d, *J* = 7.8 Hz, 1H), 8.29(d, *J* = 8.4 Hz, 1H), 7.79(d, *J* = 7.8 Hz, 1H), 7.71(d, *J* = 7.2 Hz, 1H), 7.54(d, *J* = 7.8 Hz, 1H), 7.46(m, 1H), 7.30(m, 2H), 7.15(m, 3H), 7.09(m, 3H), 6.88(t, *J* = 7.8 Hz, 1H), 6.62(d, *J* = 8.4 Hz, 1H), 6.48(s, 1H, NCH), 3.39(m, 1H), 2.92(m, 2H), 2.15(d, *J* = 13.8 Hz, 1H), 2.10(d, *J* = 13.8 Hz, 2H), 1.80(m, 2H), 1.65(m, 3H), 1.29(m, 6H), 1.17(d, *J* = 7.2 Hz, 3H, $CH_3$), 1.07(m, 3H), 0.99(s, 3H, $HfCH_3$), 0.95(m, 2H), 0.73(d, *J*=

7.2 Hz, 3H, $CH_3$), 0.70(s, 3H, $HfCH_3$), 0.23(m, 1H) ppm.

$^{13}C$ NMR($C_6D_6$): δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd. ($C_{45}H_{52}HfN_2$): C, 67.61; H, 6.56; N, 3.50%. Found: C, 67.98; H, 6.88; N, 3.19%.

(2) Preparation of organozinc compound

To 78 ml of diethyl ether, 4-vinylbenzyl chloride (15.0 g, 98.3 mmol) and a magnesium metal (2.628 g, 108.1 mmol) was added and stirred at 0°C for 1.0 hour. Then, filtration on celite was performed to remove excessively added magnesium. p-Tosyl-$OCH_2CH_2Cl$ (19.2 g, 81.9 mmol) dissolved in 27 ml of diethyl ether was added dropwisely to the 4-vinylbenzyl-MgCl Grignard reagent produced above. Stirring was performed overnight, and filtration on celite was performed to remove magnesium chloride tosylate (MgCl(OTs)) that was an insoluble salt. The filter cake thus filtered was washed with 70 ml of hexane three times, and the solvent was removed by a rotary evaporator to obtain 14.2 g of a crude product. T-butylcatechol (43 mg, 3,000 ppm) was added as a radical scavenger, and vacuum distillation was performed at 85°C under full vacuum to obtain a compound represented by Formula 8-4-1 below. As a result of measuring the weight of the compound obtained, yield was 81 wt% (12.0 g), and $^1H$ NMR and $^{13}C$ NMR spectrums were measured.

[Formula 8-4-1]

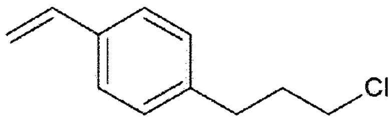

$^1H$ NMR($C_6D_6$): δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =$CH_2$), 5.09 (d, J = 9.6 Hz, 1H, =$CH_2$), 3.04 (t, J = 6.6 Hz, 2H, $CH_2$), 2.42 (t, J = 6.6 Hz, 2H, $CH_2$), 1.64 (quintet, J = 6.6 Hz, 2H, $CH_2Cl$) ppm.

$^{13}C$ NMR($C_6D_6$): δ 32.61, 34.12, 44.07, 113.13, 126.74, 128.97, 135.99, 137.11, 140.63 ppm.

Then, the compound represented by Formula 8-4-1 thus prepared (4-(3-chloropropyl)styrene, 10.0 g, 55.3 mmol) was dissolved in a mixture solvent of 20 ml of toluene and 7.98 g (111 mmol) of tetrahydrofuran (THF), and added dropwisely to a suspension in which a magnesium powder (2.02 g, 83.0 mmol) was stirred in 40 ml of toluene at room temperature. After stirring for 5.0 hours and a slight heat was slowly generated, the reaction mixture was filtered on celite to remove an excessive amount of magnesium added. Ethyl zinc methoxide (EtZn(OMe), 6.94 g, 55.3 mmol, 1 eq in contrast to Grignard reagent) produced by reacting diethyl zinc ($Et_2Zn$, 6.83 g, 55.3 mmol) and methanol (1.78 g, 55.3 mmol) in situ in 30 ml of toluene at room temperature for 1.0 hour was added to the filtrate. Then, 60 ml of toluene was added, stirring was performed at room temperature for 1.0 hour, and the solvent was removed using a high vacuum line. Then, 96 g of hexane was added, and magnesium chloride methoxide (MgCl(OMe)) that was an insoluble salt was removed on celite. The filtrate was stored at -30°C to deposit a compound represented by Formula 5-4 as the solid content of a white crystal. As a result of measuring the weight, yield was 56 wt% (7.28 g), and $^1H$ NMR and $^{13}C$ NMR spectrums were measured.

[Formula 5-4]

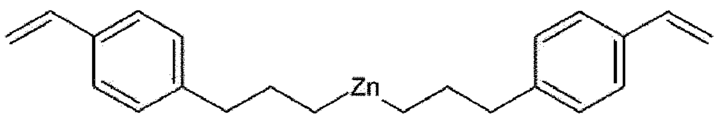

$^1H$ NMR ($C_6D_6$): δ 7.24 (d, J = 7.8 Hz, 2H), 6.90 (d, J = 7.8 Hz, 2H), 6. 64 (dd, J = 17, 11 Hz, 1H, =CH), 5.66 (d, J = 17 Hz, 1H, =$CH_2$), 5.11 (d, J = 11 Hz, 1H, =$CH_2$), 2.43 (t, J = 7.2 Hz, 2H, $CH_2$), 1.80 (quintet, J = 7.2 Hz, 2H, $CH_2$), -0.19 (t, J = 7.2 Hz, 2H, $CH_2Zn$) ppm.

$^{13}C$ NMR($C_6D_6$): δ 12.66, 28.82, 40. 09, 113.15, 127.31, 129.23, 136.05, 137.10, 142.91 ppm.

(3) Preparation of anionic polymerization initiator

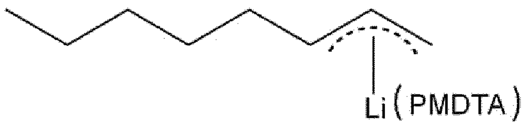

n-BuLi (0.14 mg, 2.2 mmol) was added dropwisely to pentamethyldiethylenetriamine (PMDTA, 0.37 g, 2.2 mmol) in 1-octene (13.0 g). After stirring at room temperature overnight, a yellow solution (0.16 mmol-Li/g) of pentylallyl-Li·(PMDTA) was obtained. An aliquot was analyzed by $^1H$ NMR spectroscopy. After recording a $^1H$ NMR spectrum, a $C_6D_6$ solution was quenched with $H_2O$ (or $D_2O$) and filtered from a pipette using a short pad of anhydrous $MgSO_4$, and a $^1H$ NMR spectrum was re-recorded.

**Preparation of multiblock copolymer**

**Preparation Example 1**

A parr reactor (3.785 L) was dried in vacuum at 120°C for 2 hours. A solution of MMAO (0.6 mg, 1,000 μmol-Al) in methylcyclohexane (1,200 g) was injected into the reactor as a scavenger. The mixture obtained was stirred at 120°C for 1 hour using a heating jacket, and a solution was removed using a cannula.

The reactor was filled with methylcyclohexane (1,200 g) containing MMAO (1,000 μmol-Al) as a scavenger, and 1-hexene (832 g) was charged as an olefin monomer, and then, the temperature was set to 90°C. The solution of organozinc compound (1,800 pmol) in methylcyclohexane (5 g) was charged as a chain transfer agent, and a methylcyclohexane solution containing the transition metal compound (10 μmol-Hf) activated with $[(C_{18}H_{37})_2N(H)Me]^+[B(C_6F_5)_4]^-$ (1.0 eq) in methylcyclohexane was injected. The valve of an ethylene tank was opened, and while maintaining the pressure in the reactor to 25 bar, polymerization was performed for 40 minutes in a range of 90 to 120°C. After polymerization, an ethylene gas was exhausted, and the temperature of the reactor was controlled again to 90°C.

If the temperature reached 90°C, pentylallyl-Li·(PMDTA) (3,100 μmol) in methylcyclohexane (10 g) was added. After maintaining the temperature at 90°C for 30 minutes while stirring, styrene (56 g) was injected. The temperature was controlled in a range of 90 to 100°C using a heating jacket. The viscosity was gradually increased, and within 5 hours, an almost invisible state was attained. An aliquot was taken for the analysis through $^1H$ NMR spectroscopy. From the $^1H$ NMR analysis of the aliquot, complete conversion of styrene was confirmed. After the complete conversion of styrene, 2-ethylhexanoic acid and ethanol were continuously injected. The polymer lump thus obtained was dried overnight at 80°C in a vacuum oven.

**Preparation Examples 2 to 5**

The same method as in Preparation Example 1 was performed except for changing the reaction conditions as in Table 1 below.

**Comparative Preparation Example 1**

G1645 (including C2 branch) as a SEBS of Kraton Co., was set as Comparative Preparation Example 1.

**Comparative Preparation Example 2**

The same method as in Preparation Example 1 was performed except for using diethyl zinc instead of the organozinc compound of Formula 5-4 and changing the reaction conditions as in Table 1 below in Preparation Example 1 to prepare a polymer.

**Comparative Preparation Example 3**

$Me_3SiCH_2Li$ (2,600 μmol, 291.4 mg) and PMDETA (2,600 pmol, 537.3 mg) were mixed with methylcyclohexane (20.7 g) and injected into the reactor, followed by stirring for 30 minutes. The stirring temperature was maintained at 90°C to 100°C to prepare an anionic polymerization initiator.

The same method as in Preparation Example 1 was performed except for using $Me_3SiCH_2Li\cdot(PMDETA)$ instead of pentylallyl-Li·(PMDTA) as the anionic initiator and changing the reaction conditions as in Table 1 below in Preparation Example 1 to prepare a multiblock copolymer.

**Comparative Preparation Example 4**

The same method as in Preparation Example 1 was performed except for using $Oc_3Al$ (2932.8 mg, 2,000 $\mu$mol-Al/25 wt% in hexane) instead of MMAO as a scavenger and changing the reaction conditions as in Table 1 below in Example 1 to prepare a multiblock copolymer.

[Table 1]

| | Cata lyst | Scavenger | | Organozi nc compound | | Alpha-olefin | | Sty ren e | Polymerizat ion initiator | |
|---|---|---|---|---|---|---|---|---|---|---|
| | Inje ctio n amou nt ($\mu$mo l) | Type | Injec tion amoun t ($\mu$mol ) | Type | Inj ect ion amo unt ($\mu$m ol) | Typ e | Inj ect ion amo unt (g) | (g) | Type | Injec tion amoun t ($\mu$mol ) |
| Preparation Example 1 | 10 | MMAO | 1,000 | Form ula 5-4 | 3,1 00 | 1-hex ene | 832 | 56 | allyl | 3, 100 |
| Preparation Example 2 | 20 | MMAO | 1,000 | Form ula 5-4 | 3,1 00 | 1-hex ene | 560 | 44 | allyl | 2, 600 |
| Preparation Example 3 | 10 | MMAO | 1,000 | Form ula 5-4 | 3,0 00 | 1-hex ene | 700 | 56 | allyl | 3,500 |
| Preparation Example 4 | 12 | MMAO | 1,000 | Form ula 5-4 | 3,1 00 | 1-hex ene | 560 | 143 | allyl | 2, 600 |
| Preparation Example 5 | 10 | MMAO | 1,000 | Form ula 5-4 | 5,0 00 | 1-hex ene | 600 | 65 | allyl | 3,000 |
| Comparative Preparation Example 1 | Kraton G1645 | | | | | | | | | |
| Comparative Preparation Example 2 | 6 | MMAO | 1,000 | Diet hyl zinc | 2,1 00 | 1-oct ene | 560 | 108 | allyl | 1,800 |
| Comparative Preparation Example 3 | 12 | MMAO | 1,000 | Form ula 5-4 | 3,1 00 | 1-oct ene | 560 | 98 | silyl | 2, 600 |
| Comparative Preparation Example 4 | 20 | TOA | 2,000 | Form ula 5-4 | 2,5 00 | 1-hex ene | 700 | 28 | allyl | 2,000 |

**Experimental Example 1**

With respect to the multiblock copolymers of the Preparation Examples and Comparative Preparation Examples, the physical properties below were measured.

(1) Measurement of the contents of ethylene, alpha-olefin and styrene

Measurement was performed through NMR. $^1H$ NMR was measured under conditions of ns=16, d1=3s, solvent=TCE-d2, and 373K, using a Bruker 600MHz AVANCE III HD NMR apparatus, and the solvent peak of TCE-d2 was calibrated to 6.0 ppm. $CH_3$ of 1-propylene was confirmed at 1 ppm, $CH_3$ related peaks (triplet) of butyl branch by 1-hexene were confirmed at around 0.96 ppm, and the contents were calculated. In addition, the styrene content was calculated by aromatic peaks around 6.5 to 7.5 ppm.

(2) Weight average molecular weight (Mw, g/mol) and molecular weight distribution (polydispersity index, PDI)

A weight average molecular weight (Mw, g/mol) and a number average molecular weight (Mn, g/mol) were measured, respectively, using gel permeation chromatography (GPC), and molecular weight distribution (polydispersity index, PDI) was calculated by dividing the weight average molecular weight by the number average molecular weight.

- Column: PL Olexis
- Solvent: trichlorobenzene (TCB)
- Flow rate: 1.0 ml/min
- Specimen concentration: 1.0 mg/ml
- Injection amount: 200 μl
- Column temperature: 160°C
- Detector: Agilent High Temperature RI detector
- Standard: Polystyrene
- Mark-Houwink equation was used ($K = 40.8 \times 10^{-5}$, $\alpha$=0.7057) to calculate the molecular weight by Universal Calibration.

(3) Elongation (%) and tensile strength (MPa)

Each specimen was manufactured using the block copolymers of the Preparation Examples and Comparative Preparation Examples based on a tensile test method of ASTM D412, and tensile strength, elongation and 300% modulus were measured.

[Table 2]

| | NMR (wt%) | | | GPC | | Elonga tion | Tensi le stren gth |
|---|---|---|---|---|---|---|---|
| | Ethylen e | Alpha-olefin | Styren e | Mw (g/mol) | PDI | % | MPa |
| Preparation Example 1 | 46.2 | 40.1 | 13.7 | 176,938 | 2.09 | 2.821 | 15.6 |
| Preparation Example 2 | 46.4 | 41.5 | 12.1 | 166,194 | 2.49 | 2,724 | 12.8 |
| Preparation Example 3 | 44.2 | 43.4 | 12.4 | 159, 777 | 2.03 | 2,323 | 16.4 |
| Preparation Example 4 | 39.1 | 31.5 | 29.4 | 180, 193 | 1.73 | 1,901 | 18.6 |
| Preparation Example 5 | 32.3 | 59.5 | 8.1 | 145, 778 | 2.03 | 1,460 | 12.5 |
| Comparative Preparation Example 1 | 22.0 | 65.4 | 12.6 | 101, 610 | 1.23 | 2,367 | 10.8 |
| Comparative Preparation Example 2 | 43.5 | 28.7 | 27.8 | 96, 622 | 1.48 | 2,081 | 8.8 |

(continued)

| | NMR (wt%) | | | GPC | | Elonga tion | Tensi le stren gth |
|---|---|---|---|---|---|---|---|
| | Ethylen e | Alpha-olefin | Styren e | Mw (g/mol) | PDI | % | MPa |
| Comparative Preparation Example 3 | 47.0 | 30.2 | 22.7 | 90, 772 | 1.93 | 1,905 | 7.9 |
| Comparative Preparation Example 4 | 45.6 | 38.5 | 15.9 | 109, 645 | 3.45 | 2,839 | 5.9 |

**Preparation of resin composition**

**Example 1**

To 1 part by weight of the multiblock copolymer prepared in Preparation Example 1, 0.11 parts by weight of terpolymer polypropylene with a melt index (230°C, 2.16 kg) of 7 g/10 min (RANPELEN SFC7500, LOTTE Chemical Co.) was added, and solution blending was performed in xylene using a reactor to prepare a resin composition compound. In this case, the blending was performed in conditions of the temperature of 200°C to 230°C, the impeller rotation speed of 400 rpm, and the blending time of 4 hours. After finishing the blending, the compound was recovered and dried in a vacuum oven of 100°C overnight.

**Example 2**

A resin composition compound was prepared by the same method as in Example 1 except for changing the contents of the multiblock copolymer prepared in Preparation Example 1 and the highly crystalline impact copolymer polypropylene to 1 part by weight and 0.053 parts by weight, respectively.

**Example 3**

A resin composition compound was prepared by the same method as in Example 1 except for using the multiblock copolymer prepared in Preparation Example 2 instead of the multiblock copolymer prepared in Preparation Example 1.

**Example 4**

A resin composition compound was prepared by the same method as in Example 1 except for using the multiblock copolymer prepared in Preparation Example 3 instead of the multiblock copolymer prepared in Preparation Example 1.

**Example 5**

A resin composition compound was prepared by the same method as in Example 1 except for using the multiblock copolymer prepared in Preparation Example 4 instead of the multiblock copolymer prepared in Preparation Example 1.

**Example 6**

A resin composition compound was prepared by the same method as in Example 1 except for using the multiblock copolymer prepared in Preparation Example 5 instead of the multiblock copolymer prepared in Preparation Example 1.

**Experimental Example 2**

(1) Measurement of melt flow rate (MFR)

Measurement was conducted under conditions of 230°C and a load of 2.16 kg according to ASTM-D 1238.

(2) Measurement of low temperature impact strength

Each of the resin compositions of the Examples and Comparative Examples was injected in a mold of 210°C under a pressure of 6 bar for 10 seconds, and based on ASTM D256, a notched type with a size of 63.5 mm × 10.16 mm × 3.2 mm was molded. From the specimen thus manufactured, based on ASTM D256, a pendulum with a load of 0.944 kg was hung using an Izod impact machine model 104 of Tinius Olsen Co., and impact strength at a low temperature (0°C) was measured. The impact strength at a low temperature (0°C) was measured by putting the specimen manufactured in a low temperature chamber of which temperature was set to 0°C, exposing the specimen at 0°C for 12 hours or more, taking out the specimen from the low temperature chamber, and measuring impact strength within 3 seconds.

[Table 3]

| | Resin composition | Mixing ratio (weight ratio) | MFR (230°C, 2.16 kg) (g/10 min) | Low temperature impact strength (0°C) (kgf·m/m) |
|---|---|---|---|---|
| Example 1 | PP/Preparation Example 1 | 1:0.11 | 5.7 | 12.3 |
| Example 2 | PP/Preparation Example 1 | 1:0.053 | 7.2 | 9.2 |
| Example 3 | PP/Preparation Example 2 | 1:0.11 | 7.0 | 10.6 |
| Example 4 | PP/Preparation Example 3 | 1:0.11 | 6.5 | 11.2 |
| Example 5 | PP/Preparation Example 4 | 1:0.11 | 5.5 | 12.6 |
| Example 6 | PP/Preparation Example 5 | 1:0.11 | 6.4 | 11.1 |
| Comparative Example 1 | pp/Comparative Preparation Example 1 | 1:0.11 | 6.8 | 8.5 |
| Comparative Example 2 | pp/Comparative Preparation Example 2 | 1:0.11 | 8.8 | 5.3 |
| Comparative Example 3 | pp/Comparative Preparation Example 3 | 1:0.11 | 9.1 | 5.1 |
| Comparative Example 4 | pp/Comparative Preparation Example 4 | 1:0.11 | 8.5 | 6.7 |

Referring to Table 3, it could be confirmed that the resin compositions of Examples 1 to 6, obtained by mixing the multiblock copolymers of Preparation Examples 1 to 5 with polypropylene, showed excellent low temperature impact strength when compared to the resin compositions of Comparative Examples 1 to 4, obtained by mixing the multiblock copolymers of Comparative Preparation Examples 1 to 4 with polypropylene. Particularly, when comparing Examples 1, and 3 to 6, which have the same mixing ratio of the polypropylene and the multiblock copolymer in a weight ratio of 1:0.11, with Comparative Examples 1 to 4, Examples 1 and 5 showed somewhat lower melt index than Comparative Examples 1 to 4, but showed markedly excellent low temperature impact strength. Examples 3, 4 and 6 have similar levels of melt index and showed markedly excellent low temperature impact strength when compared to Comparative Example 1. Comparative Examples 2 to 4 showed higher melt index than Examples 1 to 6, and it is judged that processability is somewhat excellent, but low temperature impact strength was significantly inferior to Examples 1 to 6, and it was evaluated to be relatively insufficient for achieving the purpose of improving the low impact strength of polypropylene

through the mixing of the polypropylene with the multiblock copolymer.

On the contrary, in the resin composition according to an embodiment of the present invention, as confirmed through the results of Example 2, a half amount of the multiblock copolymer compared to Example 1 was mixed with the polypropylene, but still even higher low temperature impact strength could be shown while achieving improved melt index when compared to Comparative Examples 1 to 4. Accordingly, it could be confirmed that the purpose of improving the low impact strength of the polypropylene by mixing the polypropylene with the multiblock copolymer could be achieved, and the problems of deteriorating the high flow properties of the resin composition could be also dissolved by using the multiblock copolymer.

## Claims

**1.** A multiblock copolymer comprising a polystyrene-based block comprising a repeating unit derived from an aromatic vinyl-based monomer, and a polyolefin-based block comprising a repeating unit derived from ethylene and a repeating unit derived from an alpha-olefin-based monomer, wherein
the content of the repeating unit derived from an alpha-olefin-based monomer measured by $^1$H NMR (500 MHz, tetrachloroethane-d2, standard material TMS) spectrum per the number of branch carbon of the repeating unit derived from an alpha-olefin-based monomer satisfies from 7.5 wt% to 15 wt%, and a weight average molecular weight measured by gel permeation chromatography (GPC) is from 110,000 g/mol to 300,000 g/mol.

**2.** The multiblock copolymer according to claim 1, wherein the content of the repeating unit derived from an alpha-olefin-based monomer is from 28 wt% to 60 wt%.

**3.** The multiblock copolymer according to claim 1, wherein the alpha-olefin-based monomer is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene and 3,4-dimethyl-1-hexene.

**4.** The multiblock copolymer according to claim 1, wherein molecular weight distribution of the multiblock copolymer is from 1.5 to 3.0.

**5.** A resin composition comprising polypropylene and a multiblock copolymer in a weight ratio of 1:0.01 to 1:0.25, wherein

the multiblock copolymer comprises a polystyrene-based block comprising a repeating unit derived from an aromatic vinyl-based monomer, and a polyolefin-based block comprising a repeating unit derived from ethylene and a repeating unit derived from an alpha-olefin-based monomer of 5 or more carbon atoms, and
the content of the repeating unit derived from an alpha-olefin-based monomer measured by $^1$H NMR (500 MHz, tetrachloroethane-d2, standard material TMS) spectrum per the number of branch carbon of the repeating unit derived from an alpha-olefin-based monomer satisfies from 7.5 wt% to 15 wt%, and a weight average molecular weight measured by gel permeation chromatography (GPC) is from 110,000 g/mol to 200,000 g/mol.

**6.** The resin composition according to claim 5, wherein the polypropylene and the multiblock copolymer are comprised in a weight ratio of 1:0.01 to 1:0.12.

**7.** The resin composition according to claim 5, wherein the resin composition has a melt flow rate (MFR) measured under conditions of 230°C and 2.16 kg load according to ASTM-D 1238 of 1 g/10 min to 15 g/10 min.

**8.** The resin composition according to claim 5, wherein the content of the repeating unit derived from an alpha-olefin-based monomer of the multiblock copolymer is from 30 wt% to 60 wt%.

**9.** A method for preparing the multiblock copolymer of claim 1, the method comprising:

(S1) a step of reacting ethylene and an alpha-olefin-based monomer using an organozinc compound as a chain transfer agent in the presence of a catalyst composition comprising a transition metal compound to prepare a polyolefin-based block; and
(S2) a step of reacting an aromatic vinyl-based monomer and the polyolefin-based block in the presence of an anionic polymerization initiator to prepare a multiblock copolymer.

**10.** The method for preparing the multiblock copolymer according to claim 9, wherein the transition metal compound is a compound represented by the following Formula 1:

[Formula 1]

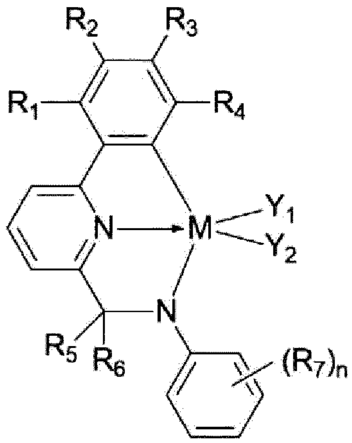

in Formula 1,

M is Ti, Zr or Hf,
$R_1$ to $R_4$ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where adjacent two or more among them may be connected to form a ring;
$R_5$ and $R_6$ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where the substitution is conducted with an alkyl group of 1 to 12 carbon atoms;
each $R_7$ is independently a substituted or unsubstituted alkyl group of 4 to 20 carbon atoms, a substituted or unsubstituted cycloalkyl group of 4 to 20 carbon atoms, or a substituted or unsubstituted aryl group of 6 to 20 carbon atoms;
n is 1 to 5; and
$Y_1$ and $Y_2$ are each independently a halogen group, an alkyl group of 1 to 20 carbon atoms, an alkenyl group of 2 to 20 carbon atoms, an alkynyl group of 2 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, a heteroaryl group of 5 to 20 carbon atoms, an alkoxy group of 1 to 20 carbon atoms, a substituted or unsubstituted aryloxy group of 5 to 20 carbon atoms, an alkylamino group of 1 to 20 carbon atoms, an arylamino group of 5 to 20 carbon atoms, an alkylthio group of 1 to 20 carbon atoms, an arylthio group of 5 to 20 carbon atoms, an alkylsilyl group of 1 to 20 carbon atoms, an arylsilyl group of 5 to 20 carbon atoms, a hydroxyl group, an amino group, a thiol group, a silyl group, a cyano group, or a nitro group.

**11.** The method for preparing the multiblock copolymer according to claim 9, wherein the organozinc compound is represented by the following Formula 5:

[Formula 5]

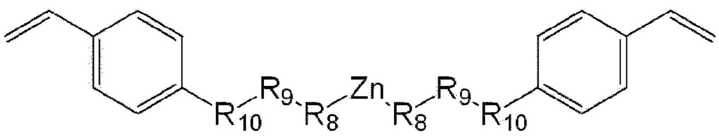

in Formula 5,
$R_8$ and $R_{10}$ are each independently a single bond or an alkylene group of 1 to 10 carbon atoms, $R_9$ is an alkylene group of 1 to 10 carbon atoms or $-SiR_{11}R_{12}-$, and $R_{11}$ and $R_{12}$ are each independently an alkyl group of 1 to 10

carbon atoms.

**12.** The method for preparing the multiblock copolymer according to claim 9, wherein the anionic polymerization initiator comprises an alkyllithium compound comprising an allyl group, and the allyl group is combined with lithium.

**13.** The method for preparing the multiblock copolymer according to claim 12, wherein the alkyllithium compound is represented by the following Formula 11:

[Formula 11]

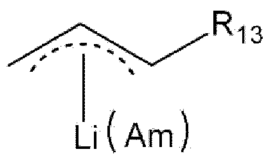

in Formula 11,

$R_{13}$ is hydrogen or a hydrocarbon group of 1 to 20 carbon atoms, and
Am is an amine-based compound represented by the following Formula 12:

[Formula 12]

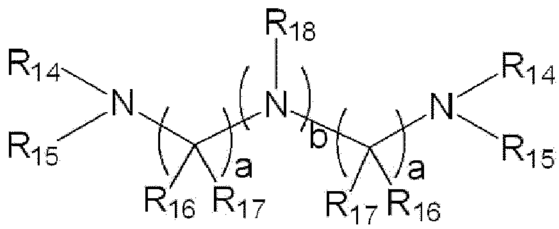

in Formula 12,

$R_{14}$ to $R_{18}$ are each independently hydrogen or a hydrocarbon group of 1 to 20 carbon atoms, and
a and b are each independently an integer of 0 to 3, where a and b are not 0 at the same time.

**14.** A method for preparing the resin composition of claim 5, the method comprising:

a step of preparing a multiblock copolymer by a preparation method comprising: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer and the polyolefin-based block in the presence of an anionic polymerization initiator to prepare a multiblock copolymer, and
a step of mixing the multiblock copolymer with polypropylene in a weight ratio of 1:0.01 to 1:0.25.

**INTERNATIONAL SEARCH REPORT**

International application No. **PCT/KR2022/014835**

**A. CLASSIFICATION OF SUBJECT MATTER**

**C08F 297/02**(2006.01)i; **C08F 212/08**(2006.01)i; **C08F 210/14**(2006.01)i; **C08F 4/64**(2006.01)i; **C08F 4/46**(2006.01)i

According to International Patent Classification (IPC) or to both national classification and IPC

**B. FIELDS SEARCHED**

Minimum documentation searched (classification system followed by classification symbols)

C08F 297/02(2006.01); C07F 3/06(2006.01); C08F 210/16(2006.01); C08F 297/08(2006.01); C08K 5/053(2006.01); C08L 25/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 다중블록 공중합체(multiblock copolymer), 폴리스티렌(polystyrene), 폴리올레핀(polyolefin), 폴리프로필렌(polypropylene), 촉매(catalyst), 유기아연화합물(organic zinc compound), 음이온중합개시제(anion polymerization initiator)

**C. DOCUMENTS CONSIDERED TO BE RELEVANT**

| Category* | Citation of document, with indication, where appropriate, of the relevant passages | Relevant to claim No. |
|---|---|---|
| Y | KIM, C. S. et al. Polystyrene Chain Growth from Di-End-Functional Polyolefins for Polystyrene-Polyolefin-Polystyrene Block Copolymers. Polymers. 2017, vol. 9, document no. 481, pp. 1-14. See abstract; formulas 2-3; table 1; and page 4. | 1-14 |
| Y | KIM, T. J. et al. Polystyrene Chain Growth Initiated from Dialkylzinc for Synthesis of Polyolefin-Polystyrene Block Copolymers. Polymers. 02 March 2020, vol. 12, document no. 537, pp. 1-14. See pages 2 and 4. | 1-14 |
| Y | KR 10-1995-0002385 B1 (KIMBERLY-CLARK CORP.) 17 March 1995 (1995-03-17) See claims 1 and 3. | 5-8,14 |
| A | KR 10-1848781 B1 (AJOU UNIVERSITY INDUSTRY-ACADEMIC COOPERATION FOUNDATION) 17 April 2018 (2018-04-17) See entire document. | 1-14 |
| A | KR 10-2010-0134571 A (DOW GLOBAL TECHNOLOGIES INC.) 23 December 2010 (2010-12-23) See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **06 January 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2022/014835**

| Patent document cited in search report | Publication date (day/month/year) | Patent family member(s) | Publication date (day/month/year) |
|---|---|---|---|
| KR 10-1995-0002385 B1 | 17 March 1995 | JP 07-081230 B2 | 30 August 1995 |
| | | JP 62-084143 A | 17 April 1987 |
| | | US 4663220 A | 05 May 1987 |
| KR 10-1848781 B1 | 17 April 2018 | CN 110475795 A | 19 November 2019 |
| | | CN 110475795 B | 08 April 2022 |
| | | CN 114369105 A | 19 April 2022 |
| | | CN 114380961 A | 22 April 2022 |
| | | EP 3590983 A1 | 08 January 2020 |
| | | JP 2020-512470 A | 23 April 2020 |
| | | JP 2021-021079 A | 18 February 2021 |
| | | JP 2021-021080 A | 18 February 2021 |
| | | JP 6789409 B2 | 25 November 2020 |
| | | JP 7101738 B2 | 15 July 2022 |
| | | KR 10-1829382 B1 | 20 February 2018 |
| | | US 11292863 B2 | 05 April 2022 |
| | | US 2020-0031978 A1 | 30 January 2020 |
| | | WO 2018-182174 A1 | 04 October 2018 |
| KR 10-2010-0134571 A | 23 December 2010 | BR PI0905769 A2 | 14 July 2015 |
| | | BR PI0905769 B1 | 05 November 2019 |
| | | CN 101983213 A | 02 March 2011 |
| | | CN 101983213 B | 01 October 2014 |
| | | EP 2238186 A1 | 13 October 2010 |
| | | EP 2238186 B1 | 28 November 2018 |
| | | JP 2011-511139 A | 07 April 2011 |
| | | JP 2016-035069 A | 17 March 2016 |
| | | JP 6170979 B2 | 26 July 2017 |
| | | JP 6184048 B2 | 23 August 2017 |
| | | US 2011-0032621 A1 | 10 February 2011 |
| | | US 8124709 B2 | 28 February 2012 |
| | | WO 2009-097565 A1 | 06 August 2009 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210130754
- KR 1020220124446
- KR 101657925